# EUROPEAN PATENT APPLICATION

(11) **EP 3 153 740 A1**
(43) Date of publication of application: **12.04.2017**
(21) Application number: 16192801.5
(22) Date of filing: 07.10.2016
(51) Int. Cl.: F16F 15/12, F16F 15/131

(54) **SEMI-ACTIVE TORQUE SPIKES CANCELLATION DEVICE AND METHOD TO CANCEL TORQUE SPIKES**

(30) Priority: 07.10.2015 US 201562238156 P
(71) Applicant: Dana Limited, Maumee, OH 43537 (US)
(72) Inventor: Versteyhe, Mark R.J., 8020 Oostkamp (BE); Van Eykeren, Laurens, 9991 Adegem (BE); De Kooning, Jonas, 2920 Kalmthout (BE)
(74) Representative: Pfenning, Meinig & Partner mbB

(57) **Abstract**

A torque ripple compensation device for a motor vehicle. The device includes an outer ring, an inner ring and a linkage. A first end portion of the linkage is connected a constraint and a second end portion of the linkage is connected to the inner ring and the outer ring. A torque in a rotating shaft is compensated, reduced and/or canceled using the device by identifying a torque spike, calculating the amplitude and/or phase of the torque spike, comparing the amplitude and/or phase of the torque spike to a pre-determined torque profile, calculating the amount of amplitude and/or phase shift from the pre-determined torque profile, determining the amount of eccentricity and/or elliptical trajectory needed to compensate, reduce and/or cancel the amount of phase and/or amplitude shift, and applying a force to the first end portion of the linkage to compensate, reduce and/or cancel the phase and/or amplitude shift calculated.

## Description

### CROSS REFERENCE TO RELATED APPLICATIONS

The present application claims the benefit to U.S. Provisional Patent Application No. 62/238,156 filed on October 7, 2015, which is incorporated herein by reference in its entirety.

### FIELD FO THE DISCLOSURE

The present invention relates to a semi-active torque cancellation solution that is used to eliminate torque spikes, torque ripples and/or torque pulses from a motor vehicle.

### BACKGROUND OF THE DISCLOSURE

There is a trend across the globe to decrease engine size as a result of recent improvements in combustion engine technology. The decreased engine size can be in terms of both smaller engine displacement and a reduced number of cylinders.

The improvements in engine technology result in more efficient vehicles. The efficiency may include increased fuel economy, better engine operation and reduced carbon dioxide emissions. A further advantage of smaller, but more powerful and efficient, engines is that vehicle manufactures can maintain the same vehicle body and vehicle performance characteristics that consumers are used to.

In some cases, the improvements are due to the use of superchargers and/or turbochargers. Superchargers and/or turbochargers increase the power output of the engine. Moreover, higher torque potential enables the use of longer gear ratios, which in turn makes down-speeding possible (i.e., operating at lower engine speeds). Downsizing, together with down-speeding, can be seen as one of the mainstream improvements in engine technology.

As mentioned above, vehicle performance characteristics with smaller, but more advanced engines can mirror vehicle characteristics when larger engines are used. A challenge associated with the smaller engine is when the engine is down-speeding an increase in the torque ripple at lower engine speeds can be experienced. The torque ripple at the engine output significantly rises with reduced idle speeds.

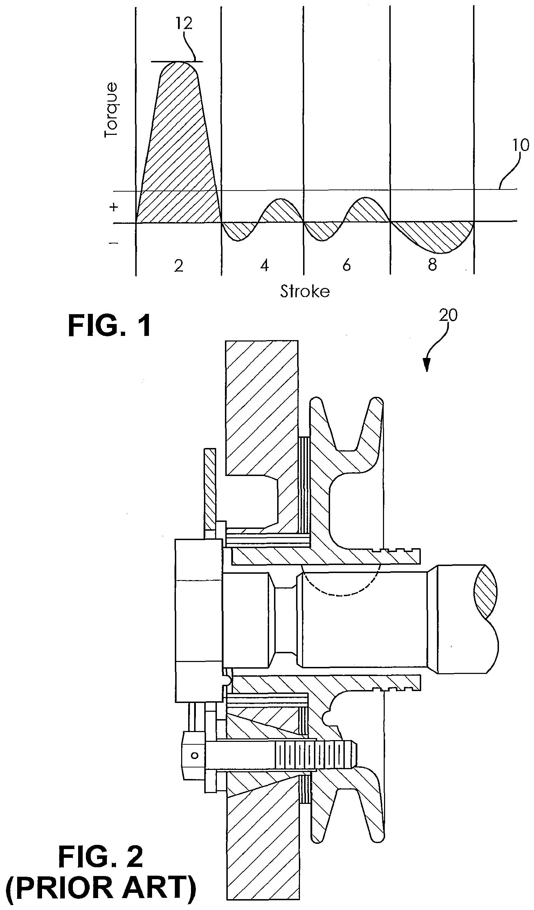

The torque ripple is caused by torque not being constantly delivered by the smaller internal combustion engine but is being delivered periodically during each power stroke. FIG. 1 graphically illustrates the torque that is being delivered during a conventional four-stroke cycle wherein section **2** is a power stroke, section **4** is an exhaust stroke, section **6** is an induction stroke, section **8** is a compression stroke and **10** is the mean torque. Additionally, as illustrated in FIG. 1 the power stroke **2** of the conventional four-stroke cycle experiences a maximum torque **12.** As a result, the torque ripple occurs once every two turns of the crankshaft for each piston in the conventional four-stroke engine. A conventional four-cylinder engine will therefore have two torque ripples per turn while in contrast a conventional three-cylinder engine will have three torque ripples every two turns.

Torque ripples are not desirable because they can cause many problems within the vehicle such as increased stresses, increased wear and a large amount of vibrations on the components near the engine. All of these can cause damage to the powertrain of the vehicle and therefore results in poor vehicle drivability.

In order to improve the smooth operation and overall performance of the engine, the stress and vibrations associated with torque ripples must be compensated by an engine balancing method. On multi-cylinder engine configurations, there are several prior art options used to balance the engine eliminate stress and vibration.

In many conventional vehicles, the vibration and stress associated with the torque ripples are compensated by using flywheels and by using dampers and absorbers together. In some cases, a dual-mass flywheel mechanism is used wherein the inertia from the flywheel smoothens the rotational movement of the crankshaft, which keeps the engine running at a constant speed. FIG. 2 illustrates a schematic side view of a conventional flywheel based dampening system **20** for a conventional driveline.

An engine designer has to consider competing interests when employing the use of flywheels as the dampening system. A lighter flywheel will accelerate faster but loses its rotational speed quicker. In contrast, a heavier flywheel will be able to retain its rotational speed for a longer period of time but it will be more difficult to slow down. While the heavier flywheel will deliver smoother power, its size will make the engine less response which results in a reduction in the precision control of the engine of the vehicle. Regardless of whether or not a light or heavy flywheel is used, the flywheel solution may not be desirable because it adds too much weight to the vehicle driveline.

In addition to the weight of the flywheel systems, they have another disadvantage in that they are not adaptable to a variety of conditions. For example, flywheel systems are typically designed for the worst operating conditions which means they are sized to be large enough to dampen the largest vibrations at low speed. This means that they are over-dimensioned for higher speeds and will degrade the overall performance of the vehicle. Furthermore, not only is the amplitude of the torque ripples varying with speed and load, but also the phase of the torque ripple varies compared to the engine rotation. It would therefore be advantageous to develop a torque ripple compensation device that could be, passively or dynamically, adaptable both in amplitude and/or phase thereby always providing the best torque ripple attenuation while degrading the performance of the vehicle as little as possible. Additionally, it would be advantageous to develop a torque ripple compensation device where the amplitude torque and the phase torque can be controlled independently without the use of any springs.

Other systems are known to reduce or minimize engine torque ripples. In U.S. Patent Application Publication Number 2014-0261282, a device is proposed where a disk is placed at an angle using a cardan joint, to counteract cyclical torque ripples. In U.S. Patent Application Publication Number 2014-0260777, a device is proposed where a non-fixed inertia is moved to achieve a variable inertia to compensate for cyclical torque ripples. In U.S. Patent Application Publication Number 2014-0260778, a torsional compensating device is connected in parallel to the output axle of a combustion engine. Cyclical acceleration of the device applies a counteracting torque which can be adapted in amplitude and phase by changing the angles of the joints.

### SUMMARY OF THE DISCLOSURE

A torque ripple compensation device for a motor vehicle. The torque ripple compensation device includes an outer ring, an inner ring and a linkage. A first end portion of the linkage is connected a constraint and a second end portion of the linkage is connected to the inner ring and the outer ring of the torque ripple compensation device.

A torque in a rotating shaft is compensated, reduced and/or canceled using the torque ripple compensation device by identifying a torque spike, calculating the amplitude and/or phase of the torque spike, comparing the amplitude and/or phase of the torque spike to a pre-determined torque profile, calculating the amount of amplitude and/or phase shift from the pre-determined torque profile, determining the amount of eccentricity and/or elliptical trajectory needed to compensate, reduce and/or cancel the amount of phase and/or amplitude shift, and applying a force to the first end portion of the linkage to compensate, reduce and/or cancel the phase and/or amplitude shift calculated.

### BRIEF DESCRIPTION OF THE DRAWINGS

The above, as well as other advantages of the present disclosure, will become readily apparent to those skilled in the art from the following detailed description when considered in light of the accompanying drawings in which:
FIG. 1 is a graphical representation illustrating a torque output of a conventional four-stroke engine during a four-stroke cycle;
FIG. 2 is a schematic side view of a conventional flywheel based dampening system that is known in the prior art;
FIG. 3 is a partial side-view of a torque ripple compensation device according to an embodiment of the disclosure;
FIG. 4 schematically illustrates the concentric torque ripple compensation device linkage system according to an embodiment of the disclosure;
FIG. 5 illustrates how a torque ripple compensation device, according to an embodiment of the disclosure, controls the amount of amplitude torque cancellation;
FIG. 6 illustrates how a torque ripple compensation device, according to an embodiment of the disclosure, controls the amount of phase torque cancellation;
FIG. 7 is a schematic side-view of a portion of a vehicle having a torque ripple compensation device according to an embodiment of the disclosure;
FIG. 8 is a schematic side-view of a portion of a vehicle having a torque ripple compensation device according to another embodiment of the disclosure;
FIG. 9 is a schematic cross-sectional side view of a portion of a torque ripple compensation device, according to yet another embodiment of the disclosure;
FIG. 10 is a schematic cross-sectional side view of a torque ripple compensation device, according to still another embodiment of the disclosure when the torque ripple compensation device is in a first position;
FIG. 10a is a schematic cross-sectional side view of a roller guide when the torque ripple compensation device is in the first position illustrated in FIG. 10;
FIG. 11 is a schematic cross-sectional side view of the torque ripple compensation device of FIG. 10 in a second position;

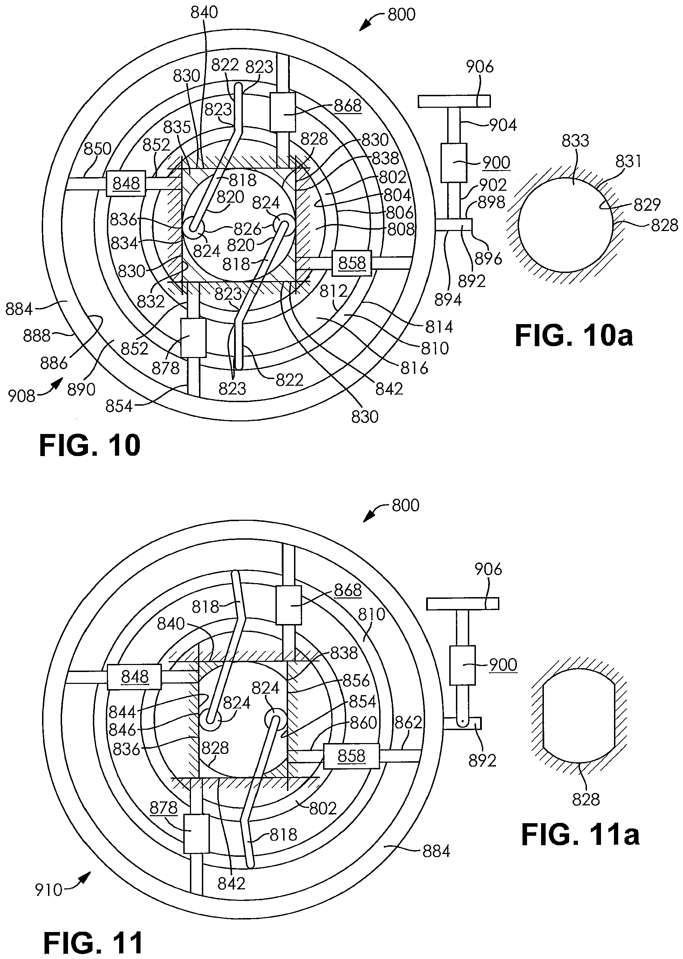

FIG. 11 a is a schematic cross-sectional side view of the roller guide when the torque ripple compensation device is in the second position illustrated in FIG. 11;

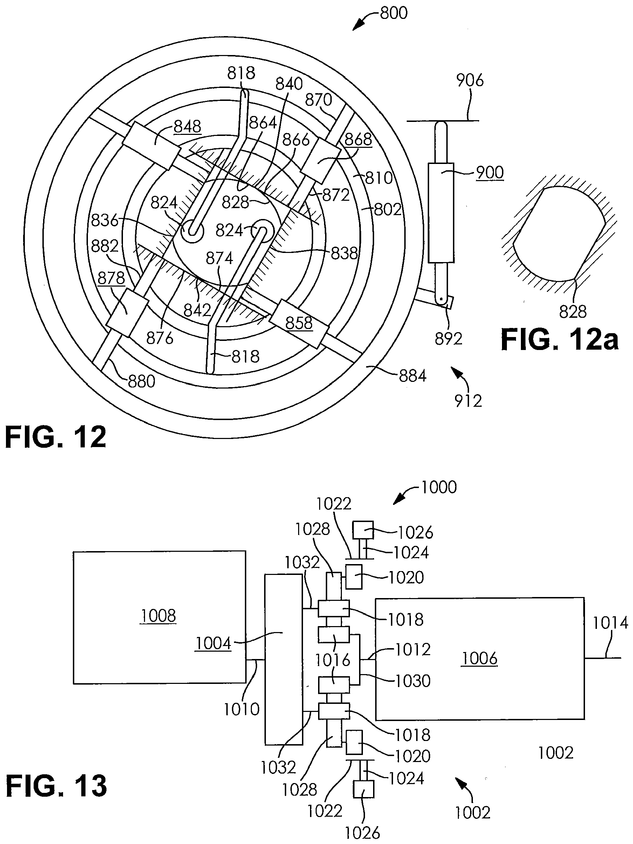

FIG. 12 is a schematic cross-sectional side view of the torque ripple compensation device of FIG. 10 in a third position;
FIG. 12a is a schematic cross-sectional side view of the roller guide when the torque ripple compensation device is in the third position illustrated in FIG. 12;
FIG. 13 is a schematic side-view of a portion of a vehicle having a torque ripple compensation device according to a further embodiment of the disclosure;

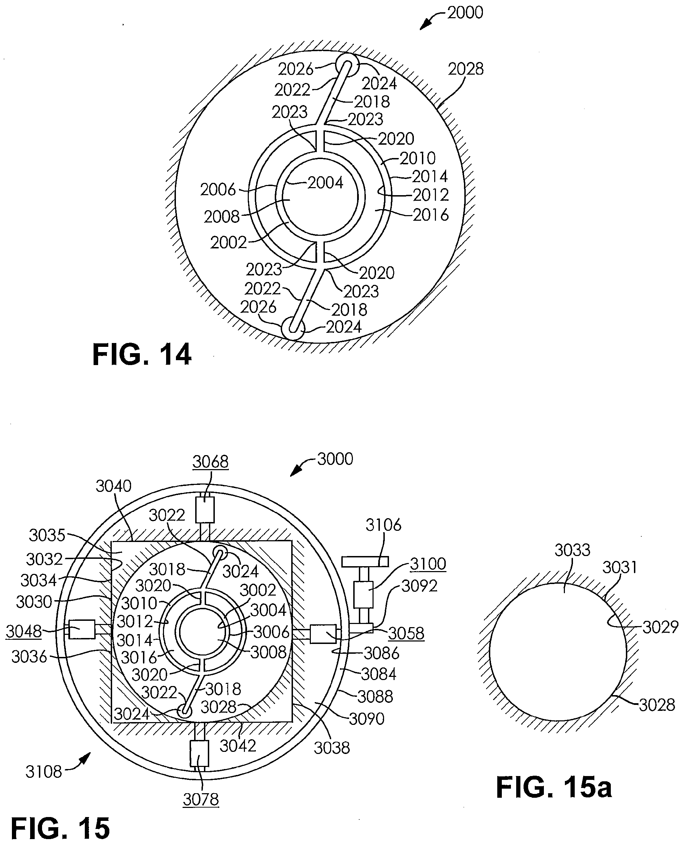

FIG. 14 is a schematic cross-sectional side view of a portion of a torque ripple compensation device, according to a further embodiment of the disclosure;
FIG. 15 is a schematic cross-sectional side view of a torque ripple compensation device, according to a further embodiment of the disclosure when the torque ripple compensation device is in a first position;
FIG. 15a is a schematic cross-sectional side view of a roller guide when the torque ripple compensation device is in the first position illustrated in FIG. 15;

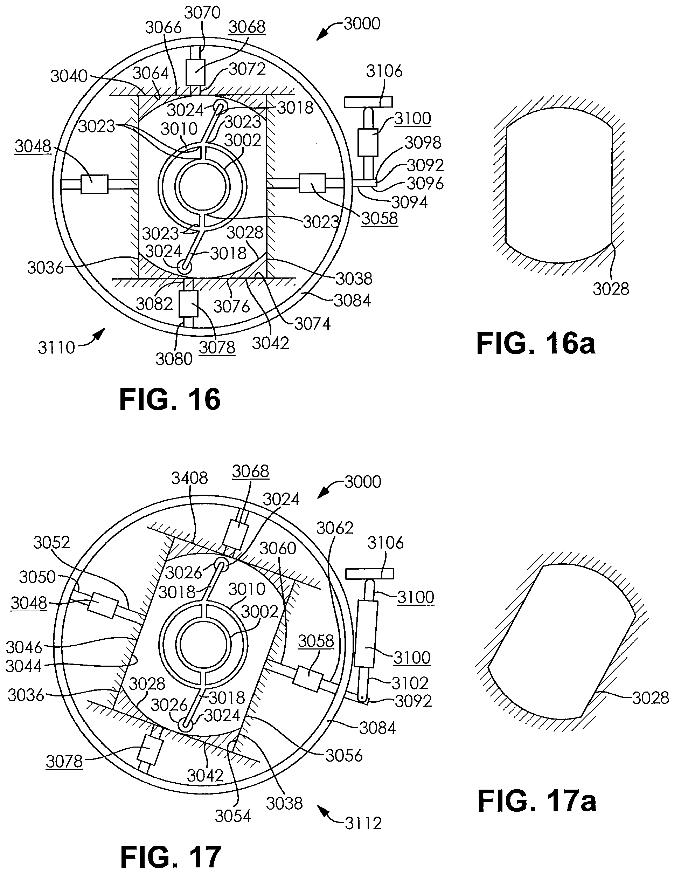

FIG. 16 is a schematic cross-sectional side view of the torque ripple compensation device of FIG. 15 in a second position;
FIG. 16a is a schematic cross-sectional side view of the roller guide when the torque ripple compensation device is in the second position illustrated in FIG. 16;
FIG. 17 is a schematic cross-sectional side view of the torque ripple compensation device of FIG. 15 in a third position; and
FIG. 17a is a schematic cross-sectional side view of the roller guide when the torque ripple compensation device is in the third position illustrated in FIG. 17.

### DETAILED DESCRIPTION OF THE DISCLOSURE

It is to be understood that the invention may assume various alternative orientations and step sequences, except where expressly specified to the contrary. It is also understood that the specific devices and processes illustrated in the attached drawings, and described in the specification are simply exemplary embodiments of the inventive concepts disclosed and defined herein. Hence, specific dimensions, directions or other physical characteristics relating to the various embodiments disclosed are not to be considered as limiting, unless expressly stated otherwise.

The present disclosure relates to a torque ripple compensation device that is able to rotate around its axle and has an input section and an output section. The torque ripple compensation device according to the present disclosure is installed in a motor vehicle in series with a driveline of the vehicle. Additionally, the torque ripple compensation device is disposed between an engine flywheel and a transmission of the vehicle. According to a non-limiting example, the torque ripple compensation device may be designed as part of the transmission or the flywheel of the vehicle. Since the torque ripple compensation device is substantially cylindrical in shape, it can be easily fitted within the blue print of the vehicle driveline.

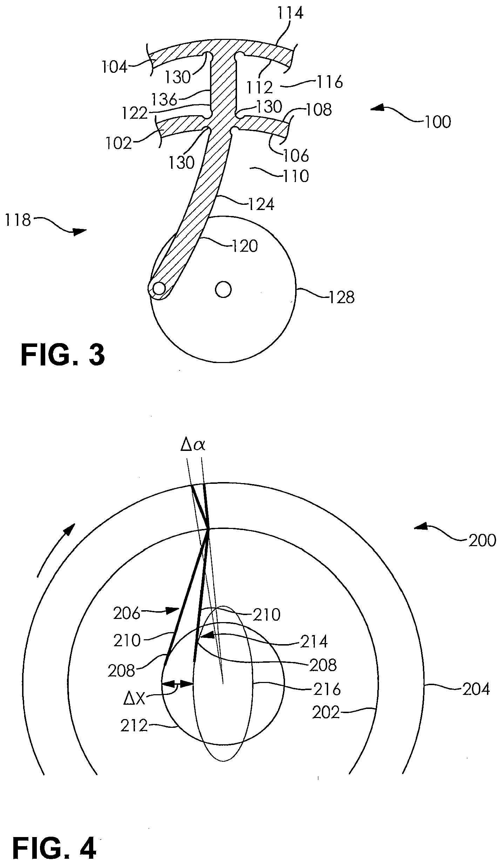

FIG. 3, is a schematic partial side view of a torque ripple compensation device **100** according to an embodiment of the disclosure. As illustrated in FIG. 3, the torque ripple compensation device **100** includes an inner ring **102** and an outer ring **104** that are able to rotate around a common axis. The inner ring **102** has an inner surface **106** and an outer surface **108** defining a hollow portion **110** therein. In a non-limiting example, the inner ring **102** may be made of steel, carbon fibre or the like.

Disposed radially outboard from the inner ring **102** is the outer ring **104** such that the outer ring **104** is concentric with the inner ring **102.** Additionally, the outer ring 104 is co-axial with the inner ring **102.** According to an alternative embodiment of the disclosure, at least a portion of the outer ring **104** is at least partially radially concentric with the inner ring **102.** Similarly, the outer ring **104** has an inner surface **112** and an outer surface **114** defining a hollow portion **116** therein. In a non-limiting example, the outer ring **104** may be made of steel, carbon fibre or the like.

A linkage system **118** is used to link the inner ring **102** to the outer ring **104.** The linkage system **118** allows for torque to be transferred between the inner ring **102** and the outer ring **104 of** the torque ripple compensation device **100.** According to a non-limiting example, the torque ripple compensation device **100** may include one or more linkage systems **118.** In accordance with this embodiment, one or more of the one or more linkage systems **118** may be able to function as a lever. The linkage system **118** has a first end portion **120,** a second end portion **122,** a first segment **124** and a second segment **136.** In a non-limiting example, the linkage system **118** may be made of steel, carbon fibre or the like.

At least a portion of the second end portion **122** of the linkage system **118** is integrally connected to the outer ring **104** and the inner ring **102** of the torque ripple compensation device **100.** In direct contact with at least a portion of the first end portion **120** of the linkage system **118** is an inner constraint **128.** In a non-limiting example, the inner constraint **128** is in direct contact with at least a portion of the first end portion **120** of the linkage system **118** by integrally connecting the first end portion **120** of the linkage system **118** to the inner constraint **128.** Additionally, in a non-limiting example, the inner constraint **128** is in direct contact with at least a portion of the first end portion **120** of the linkage system **118** by allowing the first end portion **120** of the linkage system **118** to slide or drag against the inner constraint **128.**

The constraint **128** is a mechanism which can transition from a substantially circular cross-sectional shape to a different shape thereby producing a different trajectory. In a non-limiting example, the constraint **128** is a mechanism which can be transitioned from a substantially circular cross-sectional shape to a substantially elliptical cross-sectional shape thereby producing a substantially elliptical trajectory. It is therefore understood that the constraint **128** according to the present disclosure, is a mechanism which can transition to any shape thereby providing any shape of trajectory necessary to compensate, reduce, and/or cancel any particular torque ripple. The trajectory to be followed can be implemented using one or more different mechanisms. In a non-limiting example, the one or more mechanisms of the constraint **128** is a cam shaft, an inverted cam shaft, a four-bar linkage system and/or a gear system that creates the required trajectory through a hypotrochoid, ellipsoidal and/or epitrochoid. As illustrated in FIG. 3, the constraint **128** is an inverted camshaft.

In order to prevent any backlash in the torque ripple compensation device **100** the mechanical linkage **118** can be attached to the inner ring **102** and/or the outer ring **104** by using one or more joints **130.** As illustrated in FIG. 3 and according to an alternative embodiment of the disclosure, the structure of the inner ring **102,** the outer ring **104** and the mechanical linkage **118** may narrow or have a reduced thickness at the one or more joints **130** to allow the structure of the torque ripple compensation device **100** to flex easier. The flexure may be up or down, side to side or orbital. In a non-limiting example, the one or more joints **130** of the mechanical linkage **128** that are used to attach the mechanical linkage **128** to the inner ring **102** and the outer ring **104** may be made of an elastic or a rubber material since the required angular deviation will be small. The flexible joints **130** allow a phase difference between the inner ring **102** and the outer ring **104** to be applied to the torque ripple compensation device **100.** The order of magnitude: *T_{d}*/4ω²*I*, where *T_{d}* is the torque pulse magnitude, *I* is the inertia of the flywheel and ω² is the rotational speed of the shaft.

In normal operation, the linkage system **118** is such that the inner ring **102** and the outer ring **104** are fixed together and no angular difference exists between the inner ring **102** and the outer ring **104** over time. The principle underlying the present disclosure is based on enforcing an angular difference Δα(*t*) between the inner ring **104** and the outer ring **104** by operating the linkage system **118.**

In order to obtain an optimum torque compensation, reduction and/or cancelation effect, a control system (not shown) is also used to control the torque ripple compensation device **100.**

As illustrated in FIG. 4, the working principle underlying the present disclosure is based on creating a time-varying angular difference Δα(*t*) between the shaft connected to the engine and flywheel of the vehicle, and the input shaft of the vehicle transmission. The time-varying angular difference Δα(*t*) is based on the angular position of the crankshaft, as the torque pulses are related to this later quantity.

At the point in time when there is a torque spike, torque pulse and/or torque ripple, an angular difference Δα(*t*) is applied such that a torque peak can be absorbed by the flywheel inertia. It is to be understood that the torque peak is any torque experienced that is larger than a determined mean torque value. In other words, the system gives way to the flywheel to accelerate more than the driveline thereby absorbing the torque peak. In contrast, when the torque value is smaller than the mean torque value, an opposite angular difference is applied. In this case the flywheel is slowed down to recuperate some of its momentum in-order-to compensate for the lower torque value.

As previously discussed, FIG. 4 provides a schematic illustration of how the time varying angular difference Δα(*t*) can be generated according to an embodiment of the disclosure. Without limiting the scope of the disclosure, the following example is related to the use of a torque ripple compensation device **200** in a vehicle (not shown) having a four-cylinder engine (not shown). In accordance with this example, the inner ring **202** is connected to an output shaft (not shown) and an outer ring **204** is connected to an input shaft (not shown). In a non-limiting example, the output shaft (not shown) is a transmission input shaft and the input shaft (not shown) is an engine and/or flywheel shaft.

Integrally connected to both the inner ring **202** and the outer ring **204** is a bar-linkage. As illustrated in FIG. 4 and described in more detail below, FIG. 4 illustrates the bar-linkage in two different situations or positions according to an embodiment of the disclosure.

When the torque ripple compensation device **200** is in a first position or a first situation **206** a first end portion **208** of a bar-linkage **210** is made to follow a substantially circular trajectory **212.** In a non-limiting example, the bar-linkage **210** is a mechanical linkage, a cam shaft, an inverted cam shaft, a four-bar linkage system and/or a gear system that creates the required trajectory through a hypotrochoid and/or epitrochoid. In the first position or the first situation **206,** both the inner ring **202** and the outer ring **204** have an equal rotational speed during a full rotation of the shaft and no time varying angular difference Δα(*t*) is induced.

In contrast, when the torque ripple compensation device **200** is in a second position or a second situation **214** the first end portion **208** of the bar-linkage **210** is made to follow a non-circular trajectory **216.** In a non-limiting example, when the torque ripple compensation device **200** is in the second position or a second situation **214,** the first end portion **208** of the bar-linkage **210** is made to follow an ellipsoidal trajectory. As illustrated in FIG. 4, ΔX represents the difference in the non-circular trajectory **216** in relation to the substantially circular trajectory **212** in the x-direction or the horizontal direction. As a result, ΔX represents the amount of eccentricity needed to cancel a torque spike, torque pulse and/or a torque ripple from the vehicle (not shown).

When the bar-linkage **210** is made for follow the non-circular trajectory **216,** a time varying angular difference Δα(*t*) is induced which, as previously discussed, will compensate, reduce and/or cancel the torque spike, torque pulses and/or torque ripple. Additionally, the time varying angular difference Δα(*t*) will perform two oscillations per full rotation of the shaft thereby allowing the torque ripple compensation device **200** to compensate, reduce and/or cancel second order torque spikes, torque pulses and/or torque ripples experienced in the input shaft (not shown).

In order to obtain an optimum torque compensation, reduction and/or cancelation effect, a control system (not shown) is also used to control the torque ripple compensation device **200.** The control system (not shown) needs two valves (not shown) to control the actuation system

The design of the trajectory to be followed by the linkage **210** is based on the type of engine, the order of the torque spikes, torque pulses and/or torque ripples to be compensated, reduced and/or cancelled along with the profile of the torque spikes, torque pulses and/or torque ripples to be compensated, reduced and/or cancelled.

The number of cylinders the engine (not shown) will determine the cyclic geometry symmetry of the trajectory. Without limiting the scope of the disclosure, the following examples concentrate on the compensation, reduction and/or cancellation of the first harmonic in the torque spikes, torque pulses and/or torque ripples. When using a four-cylinder, four-stroke engine, the trajectory needs to have a cyclic symmetry of 2, meaning for each full rotation of the crankshaft (not shown), the end of the linkage **210** will follow the same trajectory profile twice. In the situation where a six-cylinder, four-stroke engine is used, the trajectory needs to have a cyclic symmetry of 3. Finally, in the case where a three-cylinder, four-stroke engine is used, the trajectory needs to have a cyclic symmetry of 1.5, which means that the trajectory will need to be designed over two full rotations of the crankshaft (not shown).

The shape of the trajectory to be followed can be optimized according to the shape of the particular torque spikes, torque pulses and/or torque ripples in the engine (not shown) in-order-to achieve optimal compensation, reduction and/or cancellation. Furthermore, the profile necessary to compensate for the higher harmonics can be "added" to the base trajectory.

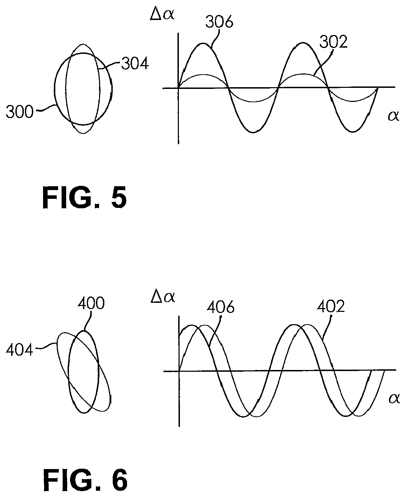

FIG. 5 illustrates how a torque ripple compensation device (not shown), according to an embodiment of the disclosure, controls the amount or the magnitude of amplitude torque cancellation. As the size, or the amplitude, of the torque spikes, torque ripples and/or torque pulses tends to decrease at higher revolutions per minute (rpms), it is essential to be able to control the magnitude or the amount of torque compensation, reduction and/or cancellation that is being performed by a torque ripple compensation device (not shown). Additionally, the magnitude of or the amount of amplitude torque that is compensated, reduced and/or cancelled is based on the angular position of the crankshaft and is therefore independent of the rotational speed of the crankshaft.

The amount or magnitude of the amplitude torque that is compensated, reduced and/or cancelled, can be controlled by the trajectory that is followed by a first end portion (not shown) of a linkage (not shown) of the torque ripple compensation device (not shown). Therefore, the amount or magnitude of amplitude torque compensation, reduction and/or cancellation is related to how close the trajectory followed by the first end portion (not shown) of the linkage (not shown) resembles that of a perfect circle. As illustrated in FIG. 5, the amount or degree of eccentricity of the trajectory followed by the first end portion (not shown) of the linkage (not shown) controls the amount or magnitude of the amplitude torque that is compensated, reduced and/or cancelled. This is referred to as the ability of the torque ripple compensation device (not shown) to perform amplitude control.

When the first end portion (not shown) of the linkage (not shown) torque ripple compensation device (not shown) is made to follow a trajectory **300** with a smaller amount or degree of eccentricity, the amount or magnitude of the amplitude torque **302** being compensated, reduced and/or cancelled is lower. In contrast, when the first end portion (not shown) of the linkage (not shown) is made to follow a trajectory **304** having a larger amount or degree of eccentricity, the amount or magnitude of the amplitude torque **306** being compensated, reduced and/or cancelled is higher.

FIG. 6 illustrates how a torque ripple compensation device (not shown), according to an embodiment of the disclosure, controls the amount or the magnitude of phase torque cancellation. In addition to the change in the amplitude of the torque spikes, torque pulses and/or torque ripples, the phase of the torque spikes, torque pulses and/or torque ripples can change with respect to the orientation of an engine (not shown) with changing rpms and engine loads.

The amount or magnitude of the phase torque that is compensated, reduced and/or cancelled, can be controlled by the orientation of the elliptical trajectory with respect to the orientation of the engine (not shown). Therefore, the amount or magnitude of phase torque compensation, reduction and/or cancellation is related to how close the orientation of the elliptical or non-circular trajectory is to the orientation of the engine (not shown). This is referred to as the ability of the torque ripple compensation device (not shown) to perform phase control.

As illustrated in FIG. 6, when for example, when the engine has an orientation **400** the torque spike, torque pulse and/or torque ripple has a phase **402.** Additionally, when the linkage (not shown) of the torque ripple compensation device (not shown) has an orientation **404** the torque ripple compensation device (not shown) produces a torque spike, torque pulse and/or torque ripple **406.** The greater the deviation of the orientation of the elliptical or non-circular trajectory followed by the linkage (not shown) from the orientation of the engine, the larger the magnitude of or amount of phase torque the torque ripple compensation device (not shown) can compensate, reduce and/or cancel.

As a result, the torque ripple compensation device according to the present disclosure is able to independently control the amplitude and/or the phase of a torque spike, torque pulse and/or a torque ripple.

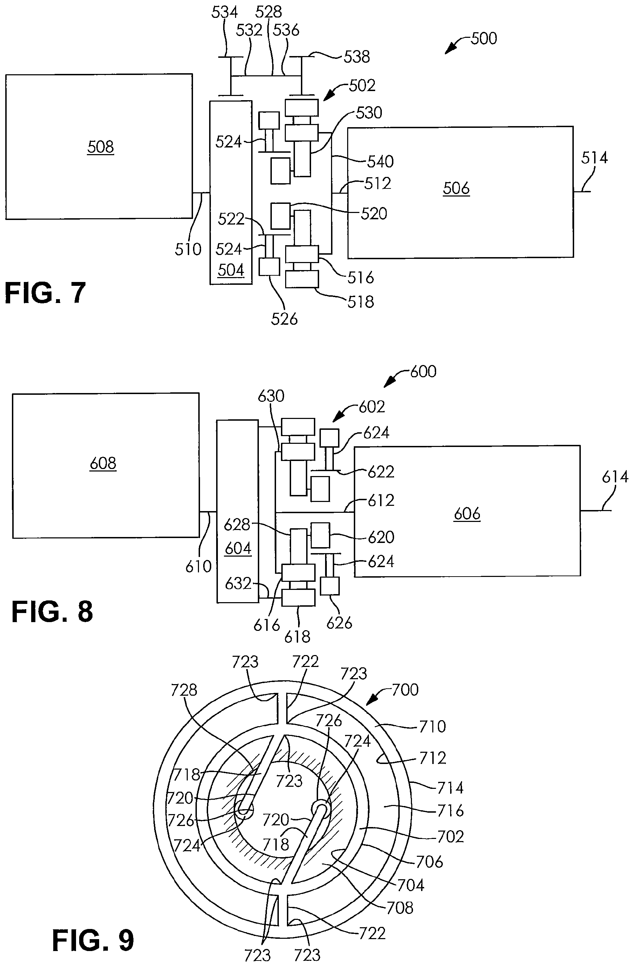

FIG. 7 is a schematic side-view of a portion of a vehicle **500** having a torque ripple compensation device **502** that is disposed between a flywheel **504** and a transmission **506.** The vehicle **500** has an engine **508** that is drivingly connected to a side of the flywheel **504** via an engine output shaft **510.** In a non-limiting example, the engine **508** may be drivingly connected to the flywheel **504** by using one or more of the following shafts (not shown): a coupling shaft, a stun shaft and/or a flywheel input shaft. The flywheel **504** is a rotating mechanism that is used to store rotational energy.

Drivingly connected to a side of the flywheel **504** opposite the engine output shaft **510** is a flywheel output shaft **512.** In a non-limiting example, the flywheel **504** may be drivingly connected to the transmission **506** by using one or more of the following shafts (not shown): a transmission input shaft, a coupling shaft and/or a stub shaft. The transmission **506** is a power management system which provides controlled application of the rotational power provided by the engine **508** by means of a gearbox. Drivingly connected to an end of the transmission **506** opposite the flywheel output shaft **512** is a transmission output shaft **514.**

The torque ripple compensation device **502,** according to an embodiment of the disclosure, includes an inner ring **516,** an outer ring **518,** one or more rollers **520,** one or more roller guides **522,** one or more actuators **524,** a rotating ring **526,** a lay shaft **528** and one or more mechanical linkages **530.** The inner ring **516** has a smaller diameter than the outer ring **518** such that the outer ring **518** is disposed radially outboard from the inner ring **516.** Additionally, the inner ring **516** is co-axial with both the outer ring **518** and the flywheel output shaft **512.** Furthermore, the inner ring **516** is at least partially radially concentric with the outer ring **518.**

Integrally connecting the inner ring **516** of the torque ripple compensation device **502** to the outer ring **518** of the torque ripple compensation device **502** is the one or more mechanical linkages **530.** An end of the one or more mechanical linkages **530** opposite the inner ring **516** and the outer ring **518** is directly connected to the one or more rollers **520.** Additionally, the one or more mechanical linkages **530** extend radially transverse to the inner ring **516** and the outer ring **518** of the torque ripple compensation device **502.** In a non-limiting example, the end of the one or more mechanical linkages **530** opposite the inner ring **516** and the outer ring **518** is connected to the one or more rollers **520** by using one or more of the following: a shaft, a linkage, a pin, a coupling shaft and/or a stub shaft.

According to an embodiment of the disclosure, the one or more rollers **520** are disposed axially outboard from the one or more mechanical linkages **530** such that the one or more rollers **520** are at least partially disposed between the one or more mechanical linkages **530** and the flywheel **504.** According to an alternative embodiment of the disclosure (not shown), the one or more rollers are disposed axially inboard from the one or more mechanical linkages such that the one or more rollers are at least partially disposed between the one or more mechanical linkages and the transmission.

In direct contact with at least a portion of an outer surface of the one or more rollers **520** is the one or more roller guides **522.** In a non-limiting example, the one or more roller guides **522** are one or more constraints, cam shafts, inverted cam shafts, four-bar linkage systems, gear systems and/or any other mechanisms which can impose a non-circular rotational trajectory on the end of the one or more mechanical linkages **530** opposite the inner ring **516** and the outer ring **518.** As a non-limiting example, the non-circular trajectory is an ellipsoidal, a hypotrochoid and/or an epitrochoid trajectory.

In order to drive the one or more roller guides **522,** the one or more actuators **524** are disposed radially outboard from the one or more roller guides **522.** Additionally, the one or more actuators **524** are integrally connected to a side of the one or more roller guides **522** opposite the one or more rollers **520.**

Disposed radially outboard from the one or more actuators **524** and integrally connected to an end of the one or more actuators **524** opposite the one or more roller guides **522,** is the rotatable ring **526.** Additionally, the rotatable ring **526** is co-axial with and at least partially radially concentric with the flywheel output shaft **512.**

As illustrated in FIG. 7, the lay shaft **528** connects the outer ring **518** of the torque ripple compensation device **502** to the flywheel **504.** Integrally connected to at least a portion of a first **end** portion **532** of the lay shaft **528** is a first gear **534** which drivingly connects the lay shaft **528** to the flywheel **504.** According to an embodiment of the disclosure, at least a portion of an outer surface of the flywheel **504** includes a plurality of teeth (not shown) circumferentially extending from the outer surface of the flywheel **504.** The plurality of teeth (not shown) extending from at least a portion of the outer surface of the flywheel **504** are complementary to and meshingly engaged with a plurality of teeth (not shown) circumferentially extending from at least a portion of an outer surface of the first gear **534.**

Additionally, integrally connected to at least a portion of the second end portion **536** of the lay shaft **528** is a second gear **538** that drivingly connects the lay shaft **528** to the outer ring **518** of the torque ripple compensation device **502.** According to an embodiment of the disclosure, at least a portion of an outer surface of the outer ring **518** of the torque ripple compensation device **502** includes a plurality of teeth (not shown) circumferentially extending from the outer surface of the outer ring **518.** The plurality of teeth (not shown) extending from at least a portion of the outer surface of the outer ring **518** are complementary to and meshingly engaged with a plurality of teeth (not shown) circumferentially extending from at least a portion of an outer surface of the second gear **538.**

Furthermore, as illustrated in FIG. 7, one or more inner ring connectors **540** integrally connects the inner ring **516** of the torque ripple compensation device **502** to the flywheel output shaft **512.** As previously discussed, the flywheel **504** may be drivingly connected to the transmission **506** by using one or more of the following shafts (not shown): a transmission input shaft, a coupling shaft and/or a stub shaft. It is therefore understood that the one or more inner ring connectors **540** may be integrally connected to a transmission input shaft, a coupling shaft and/or a stub shaft.

According to an embodiment of the disclosure, the one or more inner ring connectors **540** are disposed axially inboard from the one or more mechanical linkages **530** such that at least a portion of the one or more inner ring connectors **540** are disposed between the one or more mechanical linkages **530** and the transmission **506.** Additionally, according to yet another embodiment of the disclosure (not shown), the one or more inner ring connectors are disposed axially outboard from the one or more mechanical linkages such that at least a portion of the one or more inner ring connectors are disposed between the one or more mechanical linkages and the flywheel.

In order to obtain an optimum torque compensation, reduction and/or cancelation effect, a control system (not shown) is also used to control the torque ripple compensation device **502.** The control system (not shown) requires the use of two valves (not shown) to control the one or more actuators **524** of the torque ripple compensation device **502.** Additionally, the control system (not shown) includes the use of one or more sensors (not shown) to determine an instantaneous axle angle in relation to a chassis (not shown) of a vehicle **500** and a torque generated by the engine **508.**

The instantaneous axle angle is measured by using a position sensor (not shown) that monitors a plurality of teeth passing on a flywheel gearing (not shown). Additionally, the torque generated by the engine **508** can be received using a Controller Area Network (CAN) (not shown) signal that is received from a motor Engine Control Unit (ECU) (not shown).

According to yet another embodiment of the disclosure (not shown) where the flywheel contains one or more springs that act as a damper, the torque generated by the engine can be determined by measuring the speed at an input and an output of the flywheel. In accordance with this embodiment of the disclosure (not shown), the torque generated by the engine is determined by using a spring stiffness of the flywheel and determining the amount of torque passing through the flywheel by determining the deflection between the input and the output of the flywheel.

FIG. 8 is a schematic side-view of a portion of a vehicle **600** having a torque ripple compensation device **602** that is disposed between a flywheel **604** and a transmission **606.** The vehicle **600** has an engine **608** that is drivingly connected to a side of the flywheel **604** via an engine output shaft **610.** In a non-limiting example, the engine **608** may be drivingly connected to the flywheel **604** by using one or more of the following shafts (not shown): a coupling shaft, a stun shaft and/or a flywheel input shaft. The flywheel **604** is a rotating mechanism that is used to store rotational energy.

Drivingly connected to a side of the flywheel **604** opposite the engine output shaft **610** is a flywheel output shaft **612.** In a non-limiting example, the flywheel **604** may be drivingly connected to the transmission **606** by using one or more of the following shafts (not shown): a transmission input shaft, a coupling shaft and/or a stub shaft. The transmission **606** is a power management system which provides controlled application of the rotational power provided by the engine **608** by means of a gearbox. Drivingly connected to an end of the transmission **606** opposite the flywheel output shaft **612** is a transmission output shaft **614.**

The torque ripple compensation device **602,** according to an embodiment of the disclosure, includes an inner ring **616,** an outer ring **618,** one or more rollers **620,** one or more roller guides **622,** one or more actuators **624,** a rotating ring **626** and one or more mechanical linkages **628.** The inner ring **616** has a smaller diameter than the outer ring **618** such that the outer ring **618** is disposed radially outboard from the inner ring **616.** Additionally, the inner ring **616** is co-axial with both the outer ring **618** and the flywheel output shaft **612.** Furthermore, the inner ring **616** is at least partially radially concentric with the outer ring **618.**

Integrally connecting the inner ring **616** of the torque ripple compensation device **602** to the outer ring **618** of the torque ripple compensation device **602** is the one or more mechanical linkages **628.** An end of the one or more mechanical linkages **628** opposite the inner ring **616** and the outer ring **618** is directly connected to the one or more rollers **620.** Additionally, the one or more mechanical linkages **628** extend radially transverse to the inner ring **616** and the outer ring **618** of the torque ripple compensation device **602.** In a non-limiting example, the end of the one or more mechanical linkages **628** opposite the inner ring **616** and the outer ring **618** is connected to the one or more rollers **620** by using one or more of the following: a shaft, a linkage, a pin, a coupling shaft and/or a stub shaft.

According to an embodiment of the disclosure, the one or more rollers **620** are disposed axially inboard from the one or more mechanical linkages **628** such that the one or more rollers **620** are at least partially disposed between the one or more mechanical linkages **628** and the transmission **606.** According to an alternative embodiment of the disclosure (not shown), the one or more rollers are disposed axially outboard from the one or more mechanical linkages such that the one or more rollers are at least partially disposed between the one or more mechanical linkages and the flywheel.

In direct contact with at least a portion of an outer surface of the one or more rollers **620** is the one or more roller guides **622.** In a non-limiting example, the one or more roller guides **622** are one or more constraints, cam shafts, inverted cam shafts, four-bar linkage systems, gear systems and/or any other mechanisms which can impose a non-circular rotational trajectory on the end of the one or more mechanical linkages **628** opposite the inner ring **616** and the outer ring **618.** As a non-limiting example, the non-circular trajectory is an ellipsoidal, a hypotrochoid and/or an epitrochoid trajectory.

In order to drive the one or more roller guides **622,** the one or more actuators **624** are disposed radially outboard from the one or more roller guides **622.** Additionally, the one or more actuators **624** are integrally connected to a side of the one or more roller guides **622** opposite the one or more rollers **620.**

Disposed radially outboard from the one or more actuators **624** and integrally connected to an end of the one or more actuators **624** opposite the one or more roller guides **622,** is the rotatable ring **626.** Additionally, the rotatable ring **626** is co-axial with and at least partially radially concentric with the flywheel output shaft **612.**

As illustrated in FIG. 8, one or more inner ring connectors **630** integrally connects the inner ring **616** of the torque ripple compensation device **602** to the flywheel output shaft **612.** The one or more inner ring connectors **630** are disposed axially outboard from the one or more mechanical linkages **628** such that at least a portion of the one or more inner ring connectors **630** are disposed between the one or more mechanical linkages **628** and the flywheel **604.** According to an alternative embodiment of the disclosure (not shown), the one or more inner ring connectors are disposed axially inboard from the one or more mechanical linkages such that at least a portion of the one or more inner ring connectors are disposed between the one or more mechanical linkages and the transmission.

Integrally connecting the outer ring **618** of the torque ripple compensation device **602** to the flywheel **604** is one or more outer ring connectors **632.** One end of the one or more outer ring connectors **632** is integrally connected to at least a portion of the outer ring **616,** and an end of the one or more outer ring connectors **632** opposite the outer ring **1018,** is integrally connected to at least a portion of the flywheel **604.** Additionally, the one or more outer ring connectors **632** are disposed axially outboard from the outer ring **616** of the torque ripple compensation device **602** such that at least a portion of the one or more outer ring connectors **632** is disposed between the outer ring **616** and the flywheel **604.**

In order to obtain an optimum torque compensation, reduction and/or cancelation effect, a control system (not shown) is also used to control the torque ripple compensation device **602.** The control system (not shown) requires the use of two valves (not shown) to control the one or more actuators **624** of the torque ripple compensation device **602.** Additionally, the control system (not shown) includes the use of one or more sensors (not shown) to determine an instantaneous axle angle in relation to a chassis (not shown) of a vehicle **600** and a torque generated by the engine **608.**

The instantaneous axle angle is measured by using a position sensor (not shown) that monitors a plurality of teeth passing on a flywheel gearing (not shown). Additionally, the torque generated by the engine **608** can be received using a Controller Area Network (CAN) (not shown) signal that is received from a motor Engine Control Unit (ECU) (not shown).

According to yet another embodiment of the disclosure (not shown) where the flywheel contains one or more springs that act as a damper, the torque generated by the engine can be determined by measuring the speed at an input and an output of the flywheel. In accordance with this embodiment of the disclosure (not shown), the torque generated by the engine is determined by using a sprig stiffness of the flywheel and determining the amount of torque passing through the flywheel by determining the deflection between the input and the output of the flywheel.

FIG. 9 is a schematic illustration of a cross-sectional side view of a portion of a torque ripple compensation device **700** according to an embodiment of the disclosure. The torque ripple compensation device **700** has an inner ring **702** having an inner surface **704** and an outer surface **706** defining a hollow portion **708** therein. In a non-limiting example, the inner ring **702** is made of steel, carbon fibre or the like. At least a portion of the inner ring **702** of the torque ripple compensation device **700** is integrally connected to at least a portion of one or more of the following (not shown): a flywheel, a transmission, a flywheel output shaft, a transmission input shaft, a coupling shaft and/or a stub shaft.

Disposed radially outboard from and co-axial with the inner ring **702** is an outer ring **710** having an inner surface **712** and an outer surface **714** defining a hollow portion **716** therein. In a non-limiting example, the outer ring **710** is made of steel, carbon fibre or the like. The outer ring **710** of the torque ripple compensation device **700** is at least partially radially concentric with the inner ring **702** of the torque ripple compensation device **700.** Additionally, as illustrated in FIG. 9, the outer ring **710** has a larger diameter than the inner ring **702.** Furthermore, at least a portion of the outer ring **710** of the torque ripple compensation device **700** is integrally connected to at least a portion of one or more of the following (not shown): a flywheel, a transmission, a flywheel output shaft, a transmission input shaft, a coupling shaft and/or a stub shaft.

Integrally connected to the inner ring **702** and the outer ring **710** of the torque ripple compensation device **700** is one or more mechanical linkages **718** having a first end portion **720** and a second end portion **722.** In a non-limiting example, the one or more mechanical linkages **718** are made of steel, carbon fibre or the like. As illustrated in FIG. 9, at least a portion of the second end portion **722** of the one or more mechanical linkages **718** are integrally connected to the inner ring **702** and the outer ring **710** of the torque ripple compensation device **700.** The one or more mechanical linkages **718** mechanically connects the inner ring **702** to the outer ring **710** of the torque ripple compensation device **700.** Additionally, the one or more mechanical linkages **718** extend radially inboard from the inner ring **702** and/or the outer ring **710** of the torque ripple compensation device **700.** According to an embodiment of the disclosure, the one or more mechanical linkages **718** are disposed radially transverse to the inner ring **702** and the outer ring **710** of the torque ripple compensation device **700.**

According to one embodiment of the disclosure, the one or more mechanical linkages **718** are connected to the inner ring **702** and the outer ring **710** of the torque ripple compensation device **700** by using one or more flexible joints **723.** According to an alternative embodiment of the disclosure (not shown) the structure of the inner ring, the outer ring and/or the one or more mechanical linkages may narrow or have a reduced thickness at the one or more flexible joints thereby allowing the structure of the torque ripple compensation device to flex easier. The flexure may be up or down, side to side or orbital. In a non-limiting example, the one or more flexible joints **723** may be made of an elastic or a rubber material since the required angular deviation will be small. The one or more flexible joints **723** allow a phase difference between the inner ring **702** and the outer ring **710** to be applied to the torque ripple compensation device **700.**

At least a portion of the first end portion **720** of the one or more mechanical linkages **718** are directly connected to one or more rollers **724.** In a non-limiting example, the first end portion **720** of the one or more linkages **718** are connected to the one or more rollers **724** by using one or more of the following: a shaft, a linkage, a pin, a coupling shaft and/or a stub shaft. The one or more rollers **724** are substantially circular in shape however; it is within the scope of this disclosure that the one or more rollers **724** may be any shape that will aid in imposing a non-circular trajectory on the first end portion **720** of the one or more mechanical linkages **718.** According to an embodiment of the disclosure, the one or more rollers **724** are rotatively connected to at least a portion of the first end portion **720** of the one or more mechanical linkages **718.**

At least a portion of an outer surface **726** of the one or more rollers **724** is in direct contact with one or more roller guides **728.** The one or more roller guides **728** provide the outermost path that the one or more rollers **724** can follow, thereby defining the trajectory that the one or more rollers **724** will follow in operation. In a non-limiting example, the one or more roller guides **728** are one or more constraints, cam shafts, inverted cam shafts, four-bar linkage systems, gear systems and/or any other mechanisms which can impose a non-circular rotational trajectory on the first end portion **720** of the one or more mechanical linkages **718.** As a non-limiting example, the non-circular trajectory is an ellipsoidal, a hypotrochoid and/or an epitrochoid trajectory.

FIGS. 10, 11 and 12 provide a schematic cross-sectional side view of a torque ripple compensation device **800,** according to still another embodiment of the disclosure. As illustrated in FIGS. 10, 11 and 12, the torque ripple compensation device **800** includes an inner ring **802** having an inner surface **804** and an outer surface **806** defining a hollow portion **808** therein. In a non-limiting example, the inner ring **802** is made of steel, carbon fibre or the like. At least a portion of the inner ring **802** of the torque ripple compensation device **800** is integrally connected to at least a portion of one or more of the following (not shown): a flywheel, a transmission, a flywheel output shaft, a transmission input shaft, a coupling shaft and/or a stub shaft.

Disposed radially outboard from and co-axial with the inner ring **802** is an outer ring **810** having an inner surface **812** and an outer surface **814** defining a hollow portion **816** therein. In a non-limiting example, the outer ring **810** is made of steel, carbon fibre or the like. The outer ring **810** of the torque ripple compensation device **800** is at least partially radially concentric with the inner ring **802** of the torque ripple compensation device **800.** Additionally, as illustrated in FIGS. 10, 11 and 12, the outer ring **810** has a larger diameter than the inner ring **802.** Furthermore, at least a portion of the outer ring **810** of the torque ripple compensation device **800** is integrally connected to at least a portion of one or more of the following (not shown): a flywheel, a transmission, a flywheel output shaft, a transmission input shaft, a coupling shaft and/or a stub shaft.

Integrally connected to the inner ring **802** and the outer ring **810** of the torque ripple compensation device **800** is one or more mechanical linkages **818** having a first end portion **820** and a second end portion **822.** In a non-limiting example, the one or more mechanical linkages **818** are made of steel, carbon fibre or the like. As illustrated in FIGS. 10, 11 and 12, at least a portion of the second end portion **822** of the one or more mechanical linkages **818** is integrally connected to the inner ring **802** and the outer ring **810** of the torque ripple compensation device **800.** The one or more mechanical linkages **818** mechanically connects the inner ring **802** to the outer ring **810** of the torque ripple compensation device **800.** Additionally, the one or more mechanical linkages **818** extend radially inboard from the inner ring **802** and/or the outer ring **810** of the torque ripple compensation device **800.** According to an embodiment of the disclosure, the one or more mechanical linkages **818** are disposed radially transverse to the inner ring **802** and the outer ring **810** of the torque ripple compensation device **800.**

According to one embodiment of the disclosure, the one or more mechanical linkages **818** are connected to the inner ring **802** and the outer ring **810** of the torque ripple compensation device **800** by using one or more flexible joints **823.** According to an alternative embodiment of the disclosure (not shown) the structure of the inner ring, the outer ring and/or the one or more mechanical linkages may narrow or have a reduced thickness at the one or more flexible joints thereby allowing the structure of the torque ripple compensation device to flex easier. The flexure may be up or down, side to side or orbital. In a non-limiting example, the one or more flexible joints **823** may be made of an elastic or a rubber material since the required angular deviation will be small. The one or more flexible joints **823** allow a phase difference between the inner ring **802** and the outer ring **810** to be applied to the torque ripple compensation device **800.**

At least a portion of the first end portion **820** of the one or more mechanical linkages **818** are directly connected to one or more rollers **824.** According an alternative embodiment of the disclosure, the one or more rollers **824** are also axially offset from the inner ring **802,** the outer ring **810** and/or the one or more mechanical linkages **818.** In a non-limiting example, the first end portion **820** of the one or more linkages **818** are connected to the one or more rollers **824** by using one or more of the following: a shaft, a linkage, a pin, a coupling shaft and/or a stub shaft. The one or more rollers **824** are substantially circular in shape however; it is within the scope of this disclosure that the one or more rollers **824** may be any shape that will aid in imposing a non-circular trajectory on the first end portion **820** of the one or more mechanical linkages **818.** Additionally, according to an embodiment of the disclosure, the one or more rollers **824** are rotatively connected to at least a portion of the first end portion **820** of the one or more mechanical linkages **818.**

At least a portion of an outer surface **826** of the one or more rollers **824** is in direct contact with one or more roller guides **828** having an inner surface **829** and an outer surface **831** defining a hollow portion **833** therein. As illustrated in FIGS. 10, 11 and 12, at least a portion of the outer surface **824** of the one or more rollers **824** are in direct contact with at least a portion of the inner surface **829** of the one or more roller guides **828.** According to an alternative embodiment of the disclosure, the one or more roller guides **828** are also axially offset from the inner ring **802,** the outer ring **810** and/or the one or more mechanical linkages **818.** The one or more roller guides **828** provide the outermost path that the one or more rollers **824** can follow, thereby defining the trajectory that the one or more rollers **824** and/or the first end portion **820** of the one or more mechanical linkages **818** will follow in operation. In a non-limiting example, the one or more roller guides **828** are one or more constraints, cam shafts, inverted cam shafts, four-bar linkage systems, gear systems and/or any other mechanisms which can impose a non-circular rotational trajectory on the first end portion **820** of the one or more mechanical linkages **818.** As a non-limiting example, the non-circular trajectory is an ellipsoidal, a hypotrochoid and/or an epitrochoid trajectory.

In direct contact with at least a portion of the outer surface **831** of the one or more roller guides **828** is one or more constraints **830** having an inner surface **832** and an outer surface **834** defining a hollow portion **835** therein. According to an alternative embodiment of the disclosure, the one or more constraints **830** are also axially offset from the inner ring **802,** the outer ring **810** and/or the one or more mechanical linkages **818.** As it can be seen by referencing FIGS. 10, 11 and 12, the inner surface **832** of the one or more constraints **830** is in direct contact with at least a portion of the outer surface **831** of the one or more roller guides **828.**

As illustrated in FIGS. 10, 11 and 12, and according to an embodiment of the disclosure, the torque ripple compensation device **800** includes four constraints **830** including a first vertical constraint **836** a second vertical constraint **838,** a first horizontal constraint **840** and a second horizontal constraint **842.**

The first vertical constraint **836** has an inner surface **844** and an outer surface **846** and is horizontally or axially movable by one or more first axial actuators **848** having a first end portion **850** and a second end portion **852.** At least a portion of the inner surface **844** of the first vertical constraint **836** is in direct contact with at least a portion of the outer surface **831** of the one or more roller guides **828.** Additionally, at least a portion of the outer surface **846** of the first vertical constraint **836** is integrally connected to at least a portion of the second end portion **852** of the one or more first axial actuators **848.** The one or more first axial actuators **848** are substantially horizontal in relation to the first vertical constraint **836** such that the one or more first axial actuators **848** are substantially perpendicular to the first vertical constraint **836.** According to an alternative embodiment of the disclosure, the one more first axial actuators **848** are axially offset from the inner ring **802,** the outer ring **810** and/or the one or more mechanical linkages **818.**

As illustrated in FIGS. 10, 11 and 12, the second vertical constraint **838** has an inner surface **854** and an outer surface **856** and is horizontally or axially movable by one or more second axial actuators **858** having a first end portion **860** and a second end portion **862.** At least a portion of the inner surface **854** of the second vertical constraint **838** is in direct contact with at least a portion of the outer surface **831** of the one or more roller guides **828.** Additionally, at least a portion of the outer surface **856** of the second vertical constraint **838** is integrally connected to at least a portion of the first end portion **860** of the one or more second horizontal actuators **858.** The one or more second axial actuators **858** are substantially horizontal in relation to the second vertical constraint **838** such that the one or more second axial actuators **858** are substantially perpendicular to the second vertical constraint **838.** Furthermore, vertical constraints **836** and **838** are disposed on axially opposing sides of the one or more roller guides **828** and are substantially parallel to each other. According to an alternative embodiment of the disclosure, the one or more second axial actuators **858** are axially offset from the inner ring **802,** the outer ring **810** and/or the one or more mechanical linkages **818.**

The first horizontal constraint **840** has an inner surface **864** and an outer surface **866** and is vertically or radially movable by one or more first radial actuators **868** having a first end portion **870** and a second end portion **872.** At least a portion of the inner surface **864** of the first horizontal constraint **840** is in direct contact with at least a portion of the outer surface **831** of the one or more roller guides **828.** Additionally, at least a portion of the outer surface **866** of the first horizontal constraint **840** is integrally connected to at least a portion of the second end portion **872** of the one or more first radial actuators **868.** The one or more first radial actuators **868** are substantially vertical in relation to the first horizontal constraint **840** such that the one or more first radial actuators **868** are substantially perpendicular to the first horizontal constraint **840.** According to an alternative embodiment of the disclosure, the one or more first radial actuators **868** are axially offset from the inner ring **802,** the outer ring **810** and/or the one or more mechanical linkages **818.**

As illustrated in FIGS. 10, 11 and 12, the second horizontal constraint **842** has an inner surface **874** and an outer surface **876** and is vertically or radially movable by one or more second radial actuators **878** having a first end portion **880** and a second end portion **882.** At least a portion of the inner surface **874** of the second horizontal constraint **842** is in direct contact with at least a portion of the outer surface **831** of the one or more roller guides **828.** Additionally, at least a portion of the outer surface **876** of the second horizontal constraint **842** is integrally connected to at least a portion second end portion **882** of the second radial actuator **878.** The one or more second radial actuators **878** are substantially vertical in relation to the second horizontal constraint **842** such that the one or more second radial actuators **878** are substantially perpendicular to the second horizontal constraint **842.** Furthermore, horizontal constraints **840** and **842** are disposed on radially opposing sides of the one or more roller guides **828** and are substantially parallel to each other. According to an alternative embodiment of the disclosure, the one or more first radial actuators **868** are axially offset from the inner ring **802,** the outer ring **810** and/or the one or more mechanical linkages 818.

Co-axial with but at least partially axially offset from the inner ring **802** and the outer ring **810** is a rotatable ring **884** having an inner surface **886** and an outer surface **888** defining a hollow portion **890** therein. At least a portion of the first end portion **850** of the one or more first axial actuator **848** and at least a portion of the second end portion **862** of the one or more second axial actuator **858** is integrally connected to at least a portion of the inner surface **886** of the rotatable ring **884.** Similarly, at least a portion of the first end portion **870** of the one or more first radial actuators **868** and at least a portion of the first end portion **880** of the one or more second radial actuators **878** are integrally connected to at least a portion of the inner surface **886** of the rotatable ring **884.**

According to an alternative embodiment of the disclosure (not shown), the one or more first axial actuators, second axial actuators, first radial actuators and/or second radial actuators are integrally connected to the one or more roller guides without the use of the first vertical constraint, the second vertical constraint, the first horizontal constraint and/or the second horizontal constraint.

A rotatable ring connector **892** having a first end portion **894,** a second end portion **896** and an outer surface **898** is integrally connected to at least a portion of the outer surface **888** of the rotatable ring **884.** As illustrated in FIGS. 10, 11 and 12, at least a portion of the first end portion **894** of the rotatable ring connector **892** is integrally connected to at least a portion of the outer surface **888** of the rotatable ring **884.**

In order to rotate the rotatable ring, a rotatable ring rotating device is used. According to an embodiment of the disclosure, the rotatable ring rotating device is an orientation actuator **900** having a first end portion **902** and a second end portion **904.** As illustrated in FIGS. 10, 11 and 12, at least a portion of the first end portion **902** of the orientation actuator **900** is integrally connected to at least a portion of the outer surface **898** of the rotatable ring connector **892.** According to an embodiment of the disclosure, the first end portion **902** of the orientation actuator **900** is pivotally connected to at least a portion of the outer surface **898** or the rotatable ring connector **892.** The second end portion **904** of the orientation actuator **900** is integrally connected to a portion of a vehicle chassis **906.** According to an embodiment of the disclosure, the second end portion **904** of the orientation actuator **900** is pivotally connected to at least a portion of the vehicle chassis **906.**

In accordance with an alternative embodiment of the disclosure (not shown), at least a portion of the first end portion of the orientation actuator is integrally connected to at least a portion of the outer surface of the rotatable ring. According to yet another embodiment of the disclosure (not shown), at least a portion of the first end portion of the orientation actuator is pivotally connected to at least a portion of the outer surface of the rotatable ring. Furthermore, in accordance with still another embodiment of the disclosure (not shown), the rotatable ring rotating device is not the orientation actuator previously discussed, but is an electric motor that acts upon at least a portion of the outer surface of the rotatable ring to rotate the rotatable ring.

According to yet another alternative embodiment of the disclosure (not shown), the rotatable ring is not rotatable. In accordance with this embodiment of the disclosure (not shown), at least a portion of the outer surface of the rotatable ring is integrally connected to at least a portion of the chassis of the vehicle.

When the torque ripple compensation device **800** is in a first position **908** illustrated in FIG. 10, the first vertical constraint **836,** the second vertical constraint **838,** the first horizontal constraint **840** and the second horizontal constraint **842** are not acting upon the one or more roller guides **828** and/or the one or more rollers **824.** According to an embodiment of the disclosure, when in the first position **908,** the one or more first axial actuators **848,** the one or more second axial actuators **858,** the one or more first radial actuators **868** and the one or more second radial actuators **878** are fully retracted and in their home position. As illustrated in FIGS. 10 and 10a, when the first vertical constraint **836,** the second vertical constraint **838,** the first horizontal constraint **840** and the second horizontal constraint **842** are not acting upon the one or more rollers **824,** the one or more roller guides **828** have a substantially circular shape. As a result, the shape of the trajectory of the first end portion **820** of the one or more mechanical linkages **818** is not altered and a zero angular difference is imposed between the inner ring **802** and the outer ring **810** thereby resulting in zero torque spike, torque pulse and/or torque ripple compensation, reduction and/or cancelation.

In contrast, when the torque ripple compensation device **800** is in a second position **910** illustrated in FIG. 11, the one or more first axial actuators **848** and/or the one or more second axial actuators **858** extend thereby acting upon the one or more rollers **824** and/or the first end portion **820** of the one or more mechanical linkages **818.** As illustrated in FIGS. 11 and 11 a, when the first and the second vertical constraints **836** and **838** are acting upon the one or more roller guides **828** and/or the one or more rollers **824,** the one or more roller guides **828** have a non-circular shape. As a result, the shape of the trajectory of the first end portion **820** of the one or more mechanical linkages **818** is altered and a non-zero angular difference Δα(*t*) is imposed between the inner ring **802** and the outer ring **810** thereby resulting in amplitude torque spike, torque pulse and/or torque ripple compensation, reduction and/or cancelation.

Finally, when the torque ripple compensation device **800** is in a third position **912** illustrated in FIG. 12, the one or more first axial actuators **848** and/or the one or more second axial actuators **858** extend thereby acting upon the one or more rollers **824** and/or the first end portion **820** of the one or more mechanical linkages **818.** Additionally, when in the third position **912,** the orientation actuator **900** extends and rotates the rotatable ring **884** thereby altering the orientation of the first and second vertical constraints **836** and **838,** the first and second horizontal constraints **840** and **842,** the one or more first and second axial actuators **848** and **858,** the one or more first and second radial actors **868** and **878** and/or the one or more roller guides **828** imposing a phase angle.

As illustrated in FIGS. 12 and 12a, when the first and second vertical constraints **836** and **838** are acting upon the one or more roller guides **828** and/or the one or more rollers **824** of the one or more mechanical linkages **818,** the one or more roller guides **828** have a non-circular shape. Furthermore, when the orientation actuator **900** extends and rotates the rotatable ring **884,** it alters the orientation of the one or more roller guides **828.** As a result, the shape and the orientation of the trajectory of the first end portion **820** of the one or more mechanical linkages **818** is altered and a non-zero angular difference Δα(*t*) is imposed between the inner ring **802** and the outer ring **810** thereby resulting in both amplitude and phase torque spike, torque pulse and/or torque ripple compensation, reduction and/or cancelation.

It is within the scope of the present disclosure that the first and second vertical constraints **836** and **838,** the first and second horizontal constraints **840** and **842** and/or the orientation actuator **900** may independently or in combination act upon the one or more roller guides **828** and/or the one or more rollers **824** of the first end portion **820** of the one or more mechanical linkages **818.** As a result, the torque ripple compensation device **800** according to the present disclosure, is able to impose any non-circular trajectory on and/or alter the orientation of the trajectory of the first end portion **820** of the one or more linkages **818.** This allows the torque ripple compensation device **800** to independently control both the amplitude and/or the phase of a torque spike, torque pulse and/or a torque ripple.

In order to obtain an optimum torque compensation, reduction and/or cancelation effect, a control system (not shown) is also used to control the torque ripple compensation device **800.** The control system (not shown) requires the use of two valves (not shown) to control the one or more actuators **848, 858, 868, 878** and **900** of the torque ripple compensation device **800.** Additionally, the control system (not shown) includes the use of one or more sensors (not shown) to determine an instantaneous axle angle in relation to a chassis (not shown) of a vehicle (not shown) and a torque generated by the engine (not shown).

The instantaneous axle angle is measured by using a position sensor (not shown) that monitors a plurality of teeth passing on a flywheel gearing (not shown). Additionally, the torque generated by the engine (not shown) can be received using a Controller Area Network (CAN) (not shown) signal that is received from a motor Engine Control Unit (ECU) (not shown).

According to yet another embodiment of the disclosure (not shown) where the flywheel contains one or more springs that act as a damper, the torque generated by the engine can be determined by measuring the speed at an input and an output of the flywheel. In accordance with this embodiment of the disclosure (not shown), the torque generated by the engine is determined by using a sprig stiffness of the flywheel and determining the amount of torque passing through the flywheel by determining the deflection between the input and the output of the flywheel.

FIG. 13 is a schematic side-view of a portion of a vehicle **1000** having a torque ripple compensation device **1002** that is disposed between a flywheel **1004** and a transmission **1006.** The vehicle **1000** has an engine **1008** that is drivingly connected to a side of the flywheel **1004** via an engine output shaft **1010.** In a non-limiting example, the engine **1008** may be drivingly connected to the flywheel **1004** by using one or more of the following (not shown): a coupling shaft, a stun shaft and/or a flywheel input shaft. The flywheel **1004** is a rotating mechanism that is used to store rotational energy.

Drivingly connected to a side of the flywheel **1004** opposite the engine output shaft **1010** is a flywheel output shaft **1012.** In a non-limiting example, the flywheel **1004** may be drivingly connected to the transmission **1006** by using one or more of the following shafts (not shown): a transmission input shaft, a coupling shaft and/or a stub shaft. The transmission **1006** is a power management system which provides controlled application of the rotational power provided by the engine **1008** by means of a gearbox. Drivingly connected to an end of the transmission **1006** opposite the flywheel output shaft **1012** is a transmission output shaft **1014.**

The torque ripple compensation device **1002,** according to an embodiment of the disclosure, includes an inner ring **1016,** an outer ring **1018,** one or more rollers **1020,** one or more roller guides **1022,** one or more actuators **1024,** a rotating ring **1026** and one or more mechanical linkages **1028.** The inner ring **1016** has a smaller diameter than the outer ring **1018** such that the outer ring **1018** is disposed radially outboard from the inner ring **1016.** Additionally, the inner ring **1016** is co-axial with both the outer ring **1018** and the flywheel output shaft **1012.** Furthermore, the inner ring **1016** is at least partially radially concentric with the outer ring **1018.**

Integrally connecting the inner ring **1016** of the torque ripple compensation device **1002** to the outer ring **1018** of the torque ripple compensation device **1002** is the one or more mechanical linkages **1028.** An end of the one or more mechanical linkages **1028** opposite the inner ring **1016** and the outer ring **1018** is directly connected to the one or more rollers **1020.** Additionally, the one or more mechanical linkages **1028** extends radially outboard from the inner ring **1016** and the outer ring **1018** away from the flywheel output shaft **1012.** Furthermore, the one or more mechanical linkages **1028** extend radially transverse to the inner ring **1016** and the outer ring **1018** of the torque ripple compensation device **1002.** In a non-limiting example, the end of the one or more mechanical linkages **1028** opposite the inner ring **1016** and the outer ring **1018** is connected to the one or more rollers **1020** by using one or more of the following: a shaft, a linkage, a pin, a coupling shaft and/or a stub shaft.

According to an embodiment of the disclosure, the one or more rollers **1020** are disposed axially inboard from the one or more mechanical linkages **1028** such that the one or more rollers **1020** are at least partially disposed between the one or more mechanical linkages **1028** and the transmission **1006.** According to an alternative embodiment of the disclosure (not shown), the one or more rollers are disposed axially outboard from the one or more mechanical linkages such that the one or more rollers are at least partially disposed between the one or more mechanical linkages and the flywheel.

In direct contact with at least a portion of an outer surface of the one or more rollers **1020** is the one or more roller guides **1022.** In a non-limiting example, the one or more roller guides **1022** are one or more constraints, cam shafts, inverted cam shafts, four-bar linkage systems, gear systems and/or any other mechanisms which can impose a non-circular rotational trajectory on the end of the one or more mechanical linkages **1028** opposite the inner ring **1016** and the outer ring **1018.** As a non-limiting example, the non-circular trajectory is an ellipsoidal, a hypotrochoid and/or an epitrochoid trajectory.

In order to drive the one or more roller guides **1022,** the one or more actuators **1024** are disposed radially outboard from the one or more roller guides **1022.** Additionally, the one or more actuators **1024** are integrally connected to a side of the one or more roller guides **1022** opposite the one or more rollers **1020.**

Disposed radially outboard from the one or more actuators **1024** and integrally connected to an end of the one or more actuators **1024** opposite the one or more roller guides **1022,** is the rotatable ring **1026.** Additionally, the rotatable ring **1026** is co-axial with and at least partially radially concentric with the flywheel output shaft **1012.**

As illustrated in FIG. 13, one or more inner ring connectors **1030** integrally connects the inner ring **1016** of the torque ripple compensation device **1002** to the flywheel output shaft **1012.** The one or more inner ring connectors **1030** are disposed axially inboard from the one or more mechanical linkages **1028** such that at least a portion of the one or more inner ring connectors **1030** are disposed between the one or more mechanical linkages **1028** and the transmission **1006.** According to an alternative embodiment of the disclosure (not shown), the one or more inner ring connectors are disposed axially outboard from the one or more mechanical linkages such that at least a portion of the one or more inner ring connectors are disposed between the one or more mechanical linkages and the flywheel.

Integrally connecting the outer ring **1018** of the torque ripple compensation device **1002** to the flywheel **1004** is one or more outer ring connectors **1032.** One end of the one or more outer ring connectors **1032** is integrally connected to at least a portion of the outer ring **1016,** and an end of the one or more outer ring connectors **1032** opposite the outer ring **1018,** is integrally connected to at least a portion of the flywheel **1004.** Additionally, the one or more outer ring connectors **1032** are disposed axially outboard from the outer ring **1016** of the torque ripple compensation device **1002** such that at least a portion of the one or more outer ring connectors **1032** is disposed between the outer ring **1016** and the flywheel **1004.**

In order to obtain an optimum torque compensation, reduction and/or cancelation effect, a control system (not shown) is also used to control the torque ripple compensation device **1002.** The control system (not shown) requires the use of two valves (not shown) to control the one or more actuators **1024** of the torque ripple compensation device **1002.** Additionally, the control system (not shown) includes the use of one or more sensors (not shown) to determine an instantaneous axle angle in relation to a chassis (not shown) of a vehicle **1000** and a torque generated by the engine **1008.**

The instantaneous axle angle is measured by using a position sensor (not shown) that monitors a plurality of teeth passing on a flywheel gearing (not shown). Additionally, the torque generated by the engine **1008** can be received using a Controller Area Network (CAN) (not shown) signal that is received from a motor Engine Control Unit (ECU) (not shown).

According to yet another embodiment of the disclosure (not shown) where the flywheel contains one or more springs that act as a damper, the torque generated by the engine can be determined by measuring the speed at an input and an output of the flywheel. In accordance with this embodiment of the disclosure (not shown), the torque generated by the engine is determined by using a sprig stiffness of the flywheel and determining the amount of torque passing through the flywheel by determining the deflection between the input and the output of the flywheel.

FIG. 14 is a schematic illustration of a cross-sectional side view of a portion of a torque ripple compensation device **2000** according to an embodiment of the disclosure. The torque ripple compensation device **2000** has an inner ring **2002** having an inner surface **2004** and an outer surface **2006** defining a hollow portion **2008** therein. In a non-limiting example, the inner ring **2002** is made of steel, carbon fibre or the like. At least a portion of the inner ring **2002** of the torque ripple compensation device **2000** is integrally connected to at least a portion of one or more of the following (not shown): a flywheel, a transmission, a flywheel output shaft, a transmission input shaft, a coupling shaft and/or a stub shaft.

Disposed radially outboard from and co-axial with the inner ring **2002** is an outer ring **2010** having an inner surface **2012** and an outer surface **2014** defining a hollow portion **2016** therein. In a non-limiting example, the outer ring **2010** is made of steel, carbon fibre or the like. The outer ring **2010** of the torque ripple compensation device **2000** is at least partially radially concentric with the inner ring **2002** of the torque ripple compensation device **2000.** Additionally, as illustrated in FIG. 9, the outer ring **2010** has a larger diameter than the inner ring **2002.** Furthermore, at least a portion of the outer ring **2010** of the torque ripple compensation device **2000** is integrally connected to at least a portion of one or more of the following (not shown): a flywheel, a transmission, a flywheel output shaft, a transmission input shaft, a coupling shaft and/or a stub shaft.

Integrally connected to the inner ring **2002** and the outer ring **2010** of the torque ripple compensation device **2000** is one or more mechanical linkages **2018** having a first end portion **2020** and a second end portion **2022.** In a non-limiting example, the one or more mechanical linkages **2018** are made of steel, carbon fibre or the like. As illustrated in FIG. 14, at least a portion of the first end portion **2020** of the one or more mechanical linkages **2018** are integrally connected to the inner ring **2002** and the outer ring **2010** of the torque ripple compensation device **2000.** The one or more mechanical linkages **2018** mechanically connects the inner ring **2002** to the outer ring **2010** of the torque ripple compensation device **2000.** Additionally, the one or more mechanical linkages **2018** extend radially outboard from the inner ring **2002** and/or the outer ring **2010** of the torque ripple compensation device **2000.** According to an embodiment of the disclosure, the one or more mechanical linkages **2018** are disposed radially transverse to the inner ring **2002** and the outer ring **2010** of the torque ripple compensation device **2000.**

According to one embodiment of the disclosure, the one or more mechanical linkages **2018** are connected to the inner ring **2002** and the outer ring **2010** of the torque ripple compensation device **2000** by using one or more flexible joints **2023.** According to an alternative embodiment of the disclosure (not shown) the structure of the inner ring, the outer ring and/or the one or more mechanical linkages may narrow or have a reduced thickness at the one or more flexible joints thereby allowing the structure of the torque ripple compensation device to flex easier. The flexure may be up or down, side to side or orbital. In a non-limiting example, the one or more flexible joints **2023** may be made of an elastic or a rubber material since the required angular deviation will be small. The one or more flexible joints **2023** allow a phase difference between the inner ring **2002** and the outer ring **2010** to be applied to the torque ripple compensation device **2000.**

At least a portion of the second end portion **2022** of the one or more mechanical linkages **2018** are directly connected to one or more rollers **2024.** In a non-limiting example, the second end portion **2022** of the one or more linkages **2018** are connected to the one or more rollers **2024** by using one or more of the following: a shaft, a linkage, a pin, a coupling shaft and/or a stub shaft. The one or more rollers **2024** are substantially circular in shape however; it is within the scope of this disclosure that the one or more rollers **2024** may be any shape that will aid in imposing a non-circular trajectory on the second end portion **2022** of the one or more mechanical linkages **2018.** According to an embodiment of the disclosure, the one or more rollers **2024** are rotatively connected to at least a portion of the second end portion **2022** of the one or more mechanical linkages **2018.**

At least a portion of an outer surface **2026** of the one or more rollers **2024** is in direct contact with one or more roller guides **2028.** The one or more roller guides **2028** provide the outermost path that the one or more rollers **2024** can follow, thereby defining the trajectory that the one or more rollers **2024** will follow in operation. In a non-limiting example, the one or more roller guides **2028** are one or more constraints, cam shafts, inverted cam shafts, four-bar linkage systems, gear systems and/or any other mechanisms which can impose a non-circular rotational trajectory on the second end portion **2022** of the one or more mechanical linkages **2018.** As a non-limiting example, the non-circular trajectory is an ellipsoidal, a hypotrochoid and/or an epitrochoid trajectory.

FIGS. 15, 16 and 17 provide a schematic cross-sectional side view of a torque ripple compensation device **3000,** according to still another embodiment of the disclosure. As illustrated in FIGS. 15, 16 and 17, the torque ripple compensation device **3000** includes an inner ring **3002** having an inner surface **3004** and an outer surface **3006** defining a hollow portion **3008** therein. In a non-limiting example, the inner ring **3002** is made of steel, carbon fibre or the like. At least a portion of the inner ring **3002** of the torque ripple compensation device **3000** is integrally connected to at least a portion of one or more of the following (not shown): a flywheel, a transmission, a flywheel output shaft, a transmission input shaft, a coupling shaft and/or a stub shaft.

Disposed radially outboard from and co-axial with the inner ring **3002** is an outer ring **3010** having an inner surface **3012** and an outer surface **3014** defining a hollow portion **3016** therein. In a non-limiting example, the outer ring **3010** is made of steel, carbon fibre or the like. The outer ring **3010** of the torque ripple compensation device **3000** is at least partially radially concentric with the inner ring **3002** of the torque ripple compensation device **3000.** Additionally, as illustrated in FIGS. 15, 15 and 17, the outer ring **3010** has a larger diameter than the inner ring **3002.** Furthermore, at least a portion of the outer ring **3010** of the torque ripple compensation device **3000** is integrally connected to at least a portion of one or more of the following (not shown): a flywheel, a transmission, a flywheel output shaft, a transmission input shaft, a coupling shaft and/or a stub shaft.

Integrally connected to the inner ring **3002** and the outer ring **3010** of the torque ripple compensation device **3000** is one or more mechanical linkages **3018** having a first end portion **3020** and a second end portion **3022.** In a non-limiting example, the one or more mechanical linkages **3018** are made of steel, carbon fibre or the like. As illustrated in FIGS. 15, 16 and 17, at least a portion of the first end portion **3020** of the one or more mechanical linkages **3018** is integrally connected to the inner ring **3002** and the outer ring **3010** of the torque ripple compensation device **3000.** The one or more mechanical linkages **3018** mechanically connects the inner ring **3002** to the outer ring **3010** of the torque ripple compensation device **3000.** Additionally, the one or more mechanical linkages **3018** extend radially outboard from the inner ring **3002** and/or the outer ring **3010** of the torque ripple compensation device **3000.** According to an embodiment of the disclosure, the one or more mechanical linkages **3018** are disposed radially transverse to the inner ring **3002** and the outer ring **3010** of the torque ripple compensation device **3000.**

According to one embodiment of the disclosure, the one or more mechanical linkages **3018** are connected to the inner ring **3002** and the outer ring **3010** of the torque ripple compensation device **3000** by using one or more flexible joints **3023.** According to an alternative embodiment of the disclosure (not shown) the structure of the inner ring, the outer ring and/or the one or more mechanical linkages may narrow or have a reduced thickness at the one or more flexible joints thereby allowing the structure of the torque ripple compensation device to flex easier. The flexure may be up or down, side to side or orbital. In a non-limiting example, the one or more flexible joints **3023** may be made of an elastic or a rubber material since the required angular deviation will be small. The one or more flexible joints **3023** allow a phase difference between the inner ring **3002** and the outer ring **3010** to be applied to the torque ripple compensation device **3000.**

At least a portion of the second end portion **3022** of the one or more mechanical linkages **3018** are directly connected to one or more rollers **3024.** According an alternative embodiment of the disclosure, the one or more rollers **3024** are also axially offset from the inner ring **3002,** the outer ring **3010** and/or the one or more mechanical linkages **3018.** In a non-limiting example, the second end portion **3022** of the one or more linkages **3018** are connected to the one or more rollers **3024** by using one or more of the following: a shaft, a linkage, a pin, a coupling shaft and/or a stub shaft. The one or more rollers **3024** are substantially circular in shape however; it is within the scope of this disclosure that the one or more rollers **3024** may be any shape that will aid in imposing a non-circular trajectory on the second end portion **3022** of the one or more mechanical linkages **3018.** Additionally, according to an embodiment of the disclosure, the one or more rollers **3024** are rotatively connected to at least a portion of the second end portion **3022** of the one or more mechanical linkages **3018.**

At least a portion of an outer surface **3026** of the one or more rollers **3024** is in direct contact with one or more roller guides **3028** having an inner surface **3029** and an outer surface **3031** defining a hollow portion **3033** therein. As illustrated in FIGS. 15, 16 and 17, at least a portion of the outer surface **3026** of the one or more rollers **3024** are in direct contact with at least a portion of the inner surface **3029** of the one or more roller guides **3028.** According to an alternative embodiment of the disclosure, the one or more roller guides **3028** are also axially offset from the inner ring **3002,** the outer ring **3010** and/or the one or more mechanical linkages **3018.** The one or more roller guides **3028** provide the outermost path that the one or more rollers **3024** can follow, thereby defining the trajectory that the one or more rollers **3024** and/or the second end portion **3022** of the one or more mechanical linkages **3018** will follow in operation. In a non-limiting example, the one or more roller guides **3028** are one or more constraints, cam shafts, inverted cam shafts, four-bar linkage systems, gear systems and/or any other mechanisms which can impose a non-circular rotational trajectory on the second end portion **3022** of the one or more mechanical linkages **3018.** As a non-limiting example, the non-circular trajectory is an ellipsoidal, a hypotrochoid and/or an epitrochoid trajectory.

In direct contact with at least a portion of the outer surface **3031** of the one or more roller guides **3028** is one or more constraints **3030** having an inner surface **3032** and an outer surface **3034** defining a hollow portion **3035** therein. According to an alternative embodiment of the disclosure, the one or more constraints **3030** are also axially offset from the inner ring **3002,** the outer ring **3010** and/or the one or more mechanical linkages **3018.** As it can be seen by referencing FIGS. 15, 16 and 17, the inner surface **3032** of the one or more constraints **3030** is in direct contact with at least a portion of outer surface **3031** of the one or more roller guides **3028.**

As illustrated in FIGS. 15, 16 and 17, and according to an embodiment of the disclosure, the torque ripple compensation device **3000** includes four constraints **3030** including a first vertical constraint **3036** a second vertical constraint **3038,** a first horizontal constraint **3040** and a second horizontal constraint **3042.**

The first vertical constraint **3036** has an inner surface **3044** and an outer surface **3046** and is horizontally or axially movable by one or more first axial actuators **3048** having a first end portion **3050** and a second end portion **3052.** At least a portion of the inner surface **3044** of the first vertical constraint **3036** is in direct contact with at least a portion of the outer surface **3031** of the one or more roller guides **3028.** Additionally, at least a portion of the outer surface **3046** of the first vertical constraint **3036** is integrally connected to at least a portion of the second end portion **3052** of the one or more first axial actuators **3048.** The one or more first axial actuators **3048** are substantially horizontal in relation to the first vertical constraint **3036** such that the one or more first axial actuators **3048** are substantially perpendicular to the first vertical constraint **3036.** According to an alternative embodiment of the disclosure, the one more first axial actuators **3048** are axially offset from the inner ring **3002,** the outer ring **3010** and/or the one or more mechanical linkages **3018.**

As illustrated in FIGS. 15, 16 and 17, the second vertical constraint **3038** has an inner surface **3054** and an outer surface **3056** and is horizontally or axially movable by one or more second axial actuators **3058** having a first end portion **3060** and a second end portion **3062.** At least a portion of the inner surface **3054** of the second vertical constraint **3038** is in direct contact with at least a portion of the outer surface **3031** of the one or more roller guides **3028.** Additionally, at least a portion of the outer surface **3056** of the second vertical constraint **838** is integrally connected to at least a portion of the first end portion **3060** of the one or more second horizontal actuators **3058.** The one or more second axial actuators **3058** are substantially horizontal in relation to the second vertical constraint **3038** such that the one or more second axial actuators **3058** are substantially perpendicular to the second vertical constraint **3038.** Furthermore, vertical constraints **3036** and **3038** are disposed on axially opposing sides of the one or more roller guides **3028** and are substantially parallel to each other. According to an alternative embodiment of the disclosure, the one more second axial actuators **3058** are axially offset from the inner ring **3002,** the outer ring **3010** and/or the one or more mechanical linkages **3018.**

The first horizontal constraint **3040** has an inner surface **3064** and an outer surface **3066** and is vertically or radially movable by one or more first radial actuators **3068** having a first end portion **3070** and a second end portion **3072.** At least a portion of the inner surface **3064** of the first horizontal constraint **3040** is in direct contact with at least a portion of the outer surface **3031** of the one or more roller guides **3028.** Additionally, at least a portion of the outer surface **3066** of the first horizontal constraint **3040** is integrally connected to at least a portion of the second end portion **3072** of the one or more first radial actuators **3068.** The one or more first radial actuators **3068** are substantially vertical in relation to the first horizontal constraint **3040** such that the one or more first radial actuators **3068** are substantially perpendicular to the first horizontal constraint **3040.** According to an alternative embodiment of the disclosure, the one or more first radial actuators **3068** are axially offset from the inner ring **3002,** the outer ring **3010** and/or the one or more mechanical linkages **3018.**

As illustrated in FIGS. 15, 16 and 17, the second horizontal constraint **3042** has an inner surface **3074** and an outer surface **3076** and is vertically or radially movable by one or more second radial actuators **3078** having a first end portion **3080** and a second end portion **3082.** At least a portion of the inner surface **8304** of the second horizontal constraint **3042** is in direct contact with at least a portion of the outer surface **3031** of the one or more roller guides **3028.** Additionally, at least a portion of the outer surface **3076** of the second horizontal constraint **3042** is integrally connected to at least a portion second end portion **3082** of the second radial actuator **3078.** The one or more second radial actuators **3078** are substantially vertical in relation to the second horizontal constraint **3042** such that the one or more second radial actuators **3078** are substantially perpendicular to the second horizontal constraint **3042.** Furthermore, horizontal constraints **3040** and **3042** are disposed on radially opposing sides of the one or more roller guides **3028** and are substantially parallel to each other. According to an alternative embodiment of the disclosure, the one or more first radial actuators **3068** are axially offset from the inner ring **3002,** the outer ring **3010** and/or the one or more mechanical linkages **3018.**

Co-axial with but at least partially axially offset from the inner ring **3002** and the outer ring **3010** is a rotatable ring **3084** having an inner surface **3086** and an outer surface **3088** defining a hollow portion **3090** therein. At least a portion of the first end portion **3050** of the one or more first axial actuator **3048** and at least a portion of the second end portion **3062** of the one or more second axial actuator **3058** is integrally connected to at least a portion of the inner surface **3086** of the rotatable ring **3084.** Similarly, at least a portion of the first end portion **3070** of the one or more first radial actuators **3068** and at least a portion of the first end portion **3080** of the one or more second radial actuators **3078** are integrally connected to at least a portion of the inner surface **3086** of the rotatable ring **3084.**

According to an alternative embodiment of the disclosure (not shown), the one or more first axial actuators, second axial actuators, first radial actuators and/or second radial actuators are integrally connected to the one or more roller guides without the use of the first vertical constraint, the second vertical constraint, the first horizontal constraint and/or the second horizontal constraint.

A rotatable ring connector **3092** having a first end portion **3094,** a second end portion **3096** and an outer surface **3098** is integrally connected to at least a portion of the outer surface **3088** of the rotatable ring **3084.** As illustrated in FIGS. 15, 16 and 17, at least a portion of the first end portion **3094** of the rotatable ring connector **3092** is integrally connected to at least a portion of the outer surface **3088** of the rotatable ring **3084.**

In order to rotate the rotatable ring, a rotatable ring rotating device is used. According to an embodiment of the disclosure, the rotatable ring rotating device is an orientation actuator **900** having a first end portion **902** and a second end portion **904.** As illustrated in FIGS. 15, 16 and 17, at least a portion of the first end portion **3102** of the orientation actuator **3100** is integrally connected to at least a portion of the outer surface 3098 of the rotatable ring connector **3092.** According to an embodiment of the disclosure, the first end portion **3102** of the orientation actuator **3100** is pivotally connected to at least a portion of the outer surface **3098** or the rotatable ring connector 3092. The second end portion **3104** of the orientation actuator **3100** is integrally connected to a portion of a vehicle chassis **3106.** According to an embodiment of the disclosure, the second end portion **3104** of the orientation actuator **3100** is pivotally connected to at least a portion of the vehicle chassis **3106.**

In accordance with an alternative embodiment of the disclosure (not shown), at least a portion of the first end portion of the orientation actuator is integrally connected to at least a portion of the outer surface of the rotatable ring. According to yet another embodiment of the disclosure (not shown), at least a portion of the first end portion of the orientation actuator is pivotally connected to at least a portion of the outer surface of the rotatable ring. Furthermore, in accordance with still another embodiment of the disclosure (not shown), the rotatable ring rotating device is not the orientation actuator previously discussed, but is an electric motor that acts upon at least a portion of the outer surface of the rotatable ring to rotate the rotatable ring.

According to yet another alternative embodiment of the disclosure (not shown), the rotatable ring is not rotatable. In accordance with this embodiment of the disclosure (not shown), at least a portion of the outer surface of the rotatable ring is integrally connected to at least a portion of the chassis of the vehicle.

When the torque ripple compensation device **3000** is in a first position **3108** illustrated in FIG. 15, the first vertical constraint **3036,** the second vertical constraint **3038,** the first horizontal constraint **3040** and the second horizontal constraint **3042** are not acting upon the one or more roller guides **3028** and/or the one or more rollers **3024.** According to an embodiment of the disclosure, when in the first position **3108,** the one or more first axial actuators **3048,** the one or more second axial actuators **3058,** the one or more first radial actuators **3068** and the one or more second radial actuators **3078** are fully retracted and in their home position. As illustrated in FIGS. 15 and 15a, when the first vertical constraint **3036,** the second vertical constraint **3038,** the first horizontal constraint **3040** and the second horizontal constraint **3042** are not acting upon the one or more rollers **3024,** the one or more roller guides **3028** have a substantially circular shape. As a result, the shape of the trajectory of the first end portion **3020** of the one or more mechanical linkages **3018** is not altered and a zero angular difference is imposed between the inner ring **3002** and the outer ring **3010** thereby resulting in zero torque spike, torque pulse and/or torque ripple compensation, reduction and/or cancelation.

In contrast, when the torque ripple compensation device **3000** is in a second position **3110** illustrated in FIG. 16, the one or more first axial actuators **3048** and/or the one or more second axial actuators **3058** extend thereby acting upon the one or more rollers **3024** and/or the first end portion **3020** of the one or more mechanical linkages **3018.** As illustrated in FIGS. 16 and 16a, when the first and the second vertical constraints **3036** and **3038** are acting upon the one or more roller guides **3028** and/or the one or more rollers **3024,** the one or more roller guides **3028** have a non-circular shape. As a result, the shape of the trajectory of the first end portion **3020** of the one or more mechanical linkages **3018** is altered and a non-zero angular difference Δα(t) is imposed between the inner ring **3002** and the outer ring **3010** thereby resulting in amplitude torque spike, torque pulse and/or torque ripple compensation, reduction and/or cancelation.

Finally, when the torque ripple compensation device **3000** is in a third position **3112** illustrated in FIG. 17, the one or more first axial actuators **3048** and/or the one or more second axial actuators **3058** extend thereby acting upon the one or more rollers **3024** and/or the first end portion **3020** of the one or more mechanical linkages **3018.** Additionally, when in the third position **3102,** the orientation actuator **3100** extends and rotates the rotatable ring **3084** thereby altering the orientation of the first and second vertical constraints **3036** and **3038,** the first and second horizontal constraints **3040** and **3042,** the one or more first and second axial actuators **3048** and **3058,** the one or more first and second radial actors **3068** and **3078** and/or the one or more roller guides **3028** imposing a phase angle.

As illustrated in FIGS. 17 and 17a, when the first and second vertical constraints **3036** and **3038** are acting upon the one or more roller guides **3028** and/or the one or more rollers **3024** of the one or more mechanical linkages **3018,** the one or more roller guides **3028** have a non-circular shape. Furthermore, when the orientation actuator **3100** extends and rotates the rotatable ring **3084,** it alters the orientation of the one or more roller guides **3028.** As a result, the shape and the orientation of the trajectory of the first end portion **3020** of the one or more mechanical linkages **3018** is altered and a non-zero angular difference Δα(*t*) is imposed between the inner ring **3002** and the outer ring **3010** thereby resulting in both amplitude and phase torque spike, torque pulse and/or torque ripple compensation, reduction and/or cancelation.

It is within the scope of the present disclosure that the first and second vertical constraints **3036** and **3038,** the first and second horizontal constraints **3040** and **3042** and/or the orientation actuator **3100** may independently or in combination act upon the one or more roller guides **3028** and/or the one or more rollers **3024** of the first end portion **3020** of the one or more mechanical linkages **3018.** As a result, the torque ripple compensation device **3000** according to the present disclosure, is able to impose any non-circular trajectory on an/or alter the orientation of the trajectory of the first end portion **3020** of the one or more linkages **3018.** This allows the torque ripple compensation device **3000** to independently control both the amplitude and/or the phase of a torque spike, torque pulse and/or a torque ripple.

In order to obtain an optimum torque compensation, reduction and/or cancelation effect, a control system (not shown) is also used to control the torque ripple compensation device **3000.** The control system (not shown) requires the use of two valves (not shown) to control the one or more actuators **3048, 3058, 3068, 3078** and **3100** of the torque ripple compensation device **3000.** Additionally, the control system (not shown) includes the use of one or more sensors (not shown) to determine an instantaneous axle angle in relation to a chassis (not shown) of a vehicle (not shown) and a torque generated by the engine (not shown).

The instantaneous axle angle is measured by using a position sensor (not shown) that monitors a plurality of teeth passing on a flywheel gearing (not shown). Additionally, the torque generated by the engine (not shown) can be received using a Controller Area Network (CAN) (not shown) signal that is received from a motor Engine Control Unit (ECU) (not shown).

According to yet another embodiment of the disclosure (not shown) where the flywheel contains one or more springs that act as a damper, the torque generated by the engine can be determined by measuring the speed at an input and an output of the flywheel. In accordance with this embodiment of the disclosure (not shown), the torque generated by the engine is determined by using a sprig stiffness of the flywheel and determining the amount of torque passing through the flywheel by determining the deflection between the input and the output of the flywheel.

In accordance with the provisions of the patent statutes, the present invention has been described to represent what is considered to represent the preferred embodiments. However, it should be noted that this invention can be practiced in other ways than those specifically illustrated and described without departing from the spirit or scope of this invention.

## Claims

1. A method of canceling torque spikes in a rotating shaft using a torque spike cancellation device, wherein said torque spike cancellation device comprises an outer ring and an inner ring that is co-axial with said outer ring, one or more linkages having a first end portion and a second end portion, wherein said first end portion of said one or more linkages is in direct contact with one or more constraints and said second end portion of said one or more linkages is connected to said inner ring and said outer ring, said method comprising:
identifying a torque spike on a rotating shaft;
calculating an amplitude of said torque spike;
comparing said calculated amplitude of said torque spike to a pre-determined torque profile;
calculating an amount of amplitude shift from said pre-determined torque profile;
determining a non-circular trajectory needed to cancel said amount of amplitude shift calculated;
applying a force to said first end portion of said one or more linkages to cancel said amplitude shift of said torque spike.

2. The method of cancelling torque spikes of claim 1, further comprising:
calculating a phase of said torque spike;
comparing said calculated phase of said torque spike to a pre-determined torque profile;
calculating an amount of phase shift from said pre-determined torque profile;
determining a non-circular trajectory orientation needed to cancel said amount of phase shift calculated; and
applying a force to said first end portion of said one or more mechanical linkages to cancel said phase shift of said torque spike.

3. The method of canceling torque spikes of claim 1, wherein said non-circular trajectory is an ellipsoidal, hypotrochoid and/or epitrochoid trajectory and wherein said non-circular trajectory orientation is an ellipsoidal, hypotrochoid and/or epitrochoid trajectory orientation.

4. The method of canceling torque spikes of claim 1, wherein said force applied to said first end portion of said one or more linkages imposes a time-varying angular difference Δα(*t*) between said inner ring and said outer ring.

5. A method of canceling torque spikes in a rotating shaft using a torque spike cancellation device, wherein said torque spike cancellation device comprises an outer ring and an inner ring that is co-axial with said outer ring, one or more linkages having a first end portion and a second end portion, wherein said first end portion of said one or more linkages is in direct contact with one or more constraints and said second end portion of said one or more linkages is connected to said inner ring and said outer ring, said method comprising:
identifying a torque spike on a rotating shaft;
calculating an amplitude of said torque spike;
calculating a phase of said torque spike;
comparing said calculated amplitude and said calculated phase of said torque spike to a pre-determined torque profile;
calculating an amount of amplitude shift and phase shift from said pre-determined torque profile;
determining a non-circular trajectory needed to cancel said amount of amplitude shift calculated;
determining a non-circular trajectory orientation needed to cancel said amount of phase shift calculated; and
applying a force to said first end portion of said one or more linkages to cancel said phase shift and/or said amplitude shift of said torque spike.

6. The method of canceling torque spikes of claim 5, wherein said non-circular trajectory is an ellipsoidal, hypotrochoid and/or epitrochoid trajectory and wherein said non-circular trajectory orientation is an ellipsoidal, hypotrochoid and/or epitrochoid trajectory orientation.

7. The method of canceling torque spikes of claim 5, wherein said force applied to said first end portion of said one or more linkages imposes a time-varying angular difference Δα(*t*) between said inner ring and said outer ring.

8. A torque spike compensation device, comprising:
an inner ring having an inner surface and an outer surface defining a hollow portion therein;
an outer ring having an inner surface and an outer surface defining a hollow portion therein;
wherein said outer ring has a larger diameter than said inner ring;
wherein said outer ring is co-axial with said inner ring;
wherein said outer ring is disposed radially outboard from said inner ring such that at least a portion of said outer ring is radially concentric with said inner ring;
one or more mechanical linkages having a first end portion and a second end portion;
wherein said one or more mechanical linkages extend radially transversally to said inner ring and said outer ring;
wherein at least a portion of said first end portion of said one or more mechanical linkages are rotatably connected to one or more rollers having an outer surface;
wherein at least a portion of said second end portion of said one or more mechanical linkages is integrally connected to at least a portion of said inner ring and said outer ring;
wherein said first end portion of said one or more mechanical linkages extends radially from said inner ring and said outer ring;
one or more roller guides having an inner surface and an outer surface defining a hollow portion therein;
wherein at least a portion of said inner surface of said one or more roller guides is in direct contact with at least a portion of said outer surface of said one or more rollers;
a first vertical constraint having an inner surface and an outer surface;
wherein at least a portion of said inner surface of said first vertical constraint is in direct contact with at least a portion of said outer surface of said one or more roller guides;
a second vertical constraint having an inner surface and an outer surface;
wherein at least a portion of said inner surface of said second vertical constraint is in direct contact with at least a portion of said outer surface of said one or more roller guides;
wherein said first vertical constraint and said second vertical constraint are disposed on axially opposing sides of said one or more roller guides;
a first horizontal constraint having an inner surface and an outer surface;
wherein at least a portion of said inner surface of said first horizontal constraint is in direct contact with at least a portion of said outer surface of said one or more roller guides;
a second horizontal constraint having an inner surface and an outer surface;
wherein at least a portion of said inner surface of said second horizontal constraint is in direct contact with at least a portion of said outer surface of said one or more roller guides;
wherein said first horizontal constraint and said second horizontal constraint are disposed on radially opposing sides of said one or more roller guides;
a rotatable ring having an inner surface and an outer surface defining a hollow portion therein;
wherein said rotatable ring has a larger diameter than said inner ring and said outer ring;
wherein said rotatable ring is co-axial with said inner ring and said outer ring;
wherein said rotatable ring is disposed radially outboard from said inner ring and said outer ring;
one or more first axial actuators having a first end portion and a second end portion;
wherein at least a portion of said first end portion of said one or more first axial actuators is integrally connected to at least a portion of said inner surface of said rotatable ring;
wherein at least a portion of said second end portion of said one or more first axial actuators is integrally connected to said outer surface of said first vertical constraint;
one or more second axial actuators having a first end portion and a second end portion;
wherein at least a portion of said first end portion of said one or more second axial actuators is integrally connected to at least a portion of said outer surface of said second vertical constraint;
wherein at least a portion of said second end portion of said one or more second axial actuators is integrally connected to at least a portion of said inner surface of said rotatable ring;
one or more first radial actuators having a first end portion and a second end portion;
wherein at least a portion of said first end portion of said one or more first radial actuators is integrally connected to at least a portion of said inner surface of said rotatable ring;
wherein at least a portion of said second end portion of said one or more first radial actuators is integrally connected to at least a portion of said outer surface of said first horizontal constraint;
one or more second radial actuators having a first end portion and a second end portion;
wherein at least a portion of said first end portion of said one or more second radial actuators is integrally connected to at least a portion of said inner surface of said rotatable ring; and
wherein at least a portion of said second end portion of said one or more second radial actuators is integrally connected to at least a portion of said outer surface of said second horizontal constraint.

9. The torque spike compensation device of claim 8, further comprising:
a rotatable ring rotating device having a first end portion and a second end portion;
wherein a least a portion of said first end portion of said rotatable ring rotating device is drivingly connected to at least a portion of said outer surface of said rotatable ring; and
wherein at least a portion of said second end portion of said rotatable ring rotating device is integrally connected to a portion of a vehicle chassis.

10. The torque spike compensation device of claim 9, wherein said rotatable ring rotating device is an orientation actuator and/or an electric motor.

11. The torque spike compensation device of claim 10, wherein said inner ring, said outer ring and/or said one or more mechanical linkages is made of steel or a carbon fibre material.

12. The torque spike compensation device of claim 8, wherein said outer ring is integrally connected to at least a portion of a flywheel and said inner ring is integrally connected to a flywheel output shaft, a transmission input shaft and/or a coupling shaft.

13. The torque spike compensation device of claim 8, further comprising: one or more flexible joints;
wherein said one or more flexible joints integrally connects at least a portion of said inner surface and at least a portion of said outer surface of said inner ring to at least a portion of said second end portion of said one or more mechanical linkages;
wherein said one or more flexible joints integrally connects said at least a portion of said inner surface of said outer ring to at least a portion of said second end portion od said one or more mechanical linkages; and
wherein said one or more flexible joints are made of an elastic or a rubber material.

14. The torque spike compensation device of claim 8, wherein said first end portion of said one or more mechanical linkages extends radially outboard from said inner ring and said outer ring.

15. The torque spike compensation device of claim 8, wherein said first end portion of said one or more mechanical linkages extends radially inboard from said inner ring and said outer ring.

16. The torque spike cancellation device of claim 15, further comprising:
a lay shaft having a first end portion and a second end portion;
wherein said lay shaft is disposed radially outboard from said outer surface of said outer ring;
a first gear having a plurality of teeth circumferentially extending from at least a portion of an outer surface of said first gear is integrally connected to at least a portion of said first end portion of said lay shaft;
wherein said plurality of teeth circumferentially extending from at least a portion of said outer surface of said first gear are complementary to and meshingly engaged with a plurality of teeth circumferentially extending from at least a portion of an outer surface of a flywheel;
a second gear having a plurality of teeth circumferentially extending from at least a portion of an outer surface of said second gear is integrally connected to at least a portion of said second end portion of said lay shaft; and
wherein said plurality of teeth circumferentially extending from at least a portion of said outer surface of said second gear are complementary to and meshingly engaged with a plurality of teeth circumferentially extending from at least a portion of said outer surface of said outer ring.
